# EUROPEAN PATENT APPLICATION

(11) **EP 1 662 598 A1**
(43) Date of publication of application: **31.05.2006**
(21) Application number: 04746605.7
(22) Date of filing: 29.06.2004
(51) Int. Cl.: H01M 8/12

(54) **FUEL CELL WITH REFORMER**

(30) Priority: 30.06.2003 JP 2003188961
(71) Applicant: JAPAN ENERGY CORPORATION, Tokyo-to 105-8407 (JP)
(72) Inventor: OHKUBO, Shuichi, Toda-shi, Saitama 3350026 (JP)
(74) Representative: Smith, Peter James
(86) International application number: PCT/JP2004/009136
(87) International publication number: WO 2005/001980

(57) **Abstract**

The fuel cell with a reformer according to the present invention comprises a solid electrolytic layer 56 of proton conductor or oxygen ion conductor disposed among a reforming layer 52 containing a catalyst 50 for reforming a hydrogen-content substance, a hollow layer 60 through which air containing oxygen flows and a reforming layer 52; a first electrode layer 54 formed on the surface of the solid electrolytic layer 56 opposed to the reforming cell 52; and a second electrode layer 58i formed on the surface of the solid electrolytic layer 56 opposed to the hollow layer 60, whereby electric energy is outputted form the first electrode layer 54 and the second electrode layer 56. Thus, the present invention can provide a fuel cell with a reformer which has a simple system and can solve problems of heating.

## Description

### TECHNICAL FIELD

The present invention relates to a fuel cell with a reformer, more specifically, a fuel cell with a reformer having the reformer incorporated in for reforming a hydrogen-content substance to generate hydrogen.

### BACKGROUND ART

As the environmental problems and energy problems become more serious, hydrogen is considered prospective as a new energy source taking place of petroleum. Hydrogen cannot be used as energy as it is, and a new system for mediating hydrogen is required, and the fuel cell using hydrogen as the fuel is noted.

The fuel cell, which is small, has a high power generation efficiency of 40% or more and has good characteristics that the fuel cell can operate even under a small load with the same high efficiency as at the rated operation. The fuel cell neither generates carbonic acid gas and oxygen nitride gas, nor makes noises and vibrations, as does the generator. The fuel cell also has an advantage that waste heat can be recovered in the form of warm water and steam.

The fuel cell is expected to be used in a wide variety of applications as generators and energy supply apparatuses which are highly efficient and environmental. For example, the applications are considered to be 100's kW-electric heat supply systems in condominiums, office buildings, hotels, hospitals, etc., electric power sources for driving traffic means, cars, buses, etc., several kW-domestic electric power sources, electric power sources for 10's-W electronic apparatuses, etc., and studies for the practical application in these fields are positively being made.

The fuel cell uses hydrogen as the fuel, and there are problems in the safe and stable supply of the hydrogen. The fuel cell for use in cars has requirements that the fuel cell is small and light, has a long voyage distance for once charge, the charging is simple, etc. Various hydrogen supply method considering these requirements have been proposed. For example, hydrogen is directly supplied in the form of compressed hydrogen and liquid hydrogen, is supplied from hydrogen occluding materials, such as hydrogen occlusion alloys, carbon nanotubes, etc., and is supplied by reforming methanol or hydrocarbon.
Patent Reference 1: Specification of Japanese Patent Application Unexamined Publication No. 2002-211902
Patent Reference 2: Specification of Japanese Patent Application Unexamined Publication No. 2002-246055

### DISCLOSURE OF THE INVENTION

### PROBLEMS TO BE SOLVED BY THE INVENTION

The method of supplying hydrogen by reforming hydrocarbon is noted at the transition period from the petroleum fuel to hydrogen fuel because the method can be used for a long period of time, sustaining the conventional environments.

However, in the fuel cell for cars, to conduct the reforming processing on a car it is necessary to mount a reformer on the car separately from the fuel cell, which causes the problems of mounted space, the weight, the complication of the system, etc. The reforming reaction involves high temperatures, which might cause a risk of various problems.

In the method of directly supplying hydrogen as the compressed hydrogen, for the fuel cell for cars, it is not necessary to amount the above-described reformer, which has an advantage of the simplification of the system, and the development of the light high-pressure hydrogen tank is abruptly noted.

However, it is a fear factor in terms of the safety to mount the high-pressure hydrogen tank on a car, when collisions are taken into consideration. When the hydrogen is supplied at service stations, careful attention must be paid to the safety.

An object of the present invention is to provide a fuel cell with a reformer which has few problems in safety, can be a system easy to realize and can solve the problem of heating.

### MEANS FOR SOLVING THE PROBLEMS

The above-described object is attained by a fuel cell with a reformer comprising: a reforming cell containing a catalyst for reforming a hydrogen-content substance; an air cell in which air containing oxygen flows; a solid electrolytic layer of proton conductor or oxygen conductor disposed between the reforming cell and the air cell; a first electrode layer formed on a surface of the solid electrolytic layer opposed to the reforming cell; and a second electrode layer formed on a surface of the solid electrolytic layer opposed to the air cell, electric energy being outputted from the first electrode layer and the second electrode layer.
In the specification, "air" means a gas to be an oxygen source, and is air, or a mixture of oxygen and inert gases such as nitrogen, etc.

The above-described object is attained by a fuel cell with a reformer comprising: a solid electrolytic base material of proton conductor with a plurality of first hollow sections and a plurality of second hollow section which are formed adjacent to each other; reforming cells formed in the first hollow sections filled with a catalyst for reforming a hydrogen-content substance, into which the hydrogen-content substance is introduced; air cells formed in the second hollow sections, into which air is introduced; a first electrode layer formed on the inside walls of the reforming cells; and a second electrode formed on the inside walls of the air cells, electric energy being outputted from the first electrode layer and the second electrode layer.

In the above-described fuel cell with the reformer, it is possible that a flow direction of the hydrogen-content substance in the reforming cells and a flow direction of the air in the air cells are opposite to each other.

In the above-described fuel cell with the reformer, it is possible that the solid electrolytic base material has a first end surface where one ends of the first and the second hollow sections are positioned, and a second end surface where the other ends of the first and the second hollow sections, and that the reformer incorporate fuel cell further comprises: a first distribution structure disposed on the side of the first end surface of the solid electrolytic base material, for the introduction or the discharge of fluids from the side of the first end surface into or from the first hollow sections and/or the introduction or the discharge of fluids from the side of the first end surface into or from the second hollow sections; and a second distribution structure disposed on the side of the second end surface of the solid electrolytic base material, for the discharge or the introduction of fluids from the side of the second end surface from or into the first hollow sections and/or the discharge or the introduction of fluid from the side of the second end surface from or into the second hollow sections.

The above-described object is attained by a fuel cell with a reformer comprising: a solid electrolytic base material formed of proton conductor or oxygen ion conductor and including a plurality of first hollow sections, a plurality of second hollow sections and a plurality of second hollow sections which are formed adjacent to each other; reforming cells formed in the first hollow sections filled with a catalyst for reforming a hydrogen-content substance, into which the hydrogen-content substance is introduced; air cells formed in the second hollow sections, into which air is introduced; hydrogen cells formed in the third hollow sections, into which the hydrogen generated by reforming the hydrogen-content substance in the reforming cells is introduced; a first electrode layer formed on the inside walls of the hydrogen cells; and a second electrode layer formed on the inside wall of the air cells, electric energy being outputted from the first electrode layer and the second electrode layer.

In the above-described fuel cell with the reformer, it is possible that the solid electrolytic base material including a first end surface where one end of the first to the third hollow sections are positioned, and a second end surface where the other ends of the first to the third hollow sections are positioned, and that the fuel cell with the reformer comprises: a first distribution structure disposed on the side of the first end surface of the solid electrolytic base material, for the introduction or the discharge of fluids from the side of the first end surface into or from the first hollow sections, the introduction or the discharge from the side of the first end surface into or from the second hollow sections, and/or the introduction or the discharge from the side of the first end surface into or from the third hollow sections; and a second distributor disposed on the side of the second end surface of the solid electrolytic base material, for the discharge or the introduction of fluids from the side of the second end surface from or into the first hollow sections, the discharge or the introduction of fluids from the side of the second end surface from or into the second hollow sections, and/or the discharge or the introduction of fluids from or into the third hollow sections.

In the above-described fuel cell with the reformer, it is possible that the hollow sections are hollow pillar-shaped sections having a triangular sectional shape, a rectangular sectional shape, a pentagonal sectional shape, a hexagonal sectional shape, a octagonal sectional shape, or a circular sectional shape.

In the above-described fuel cell with the reformer, it is possible that some of the reforming cells, the air cells or the hydrogen cells are spare cells which do not contribute the reaction.

### EFFECT OF THE INVENTION

As described above, the present invention comprises: a reforming cell containing a catalyst for reforming a hydrogen-content substance; an air cell in which air containing oxygen flows; a solid electrolytic layer of proton conductor or oxygen conductor disposed between the reforming cell and the air cell; a first electrode layer formed on a surface of the solid electrolytic layer opposed to the reforming cell; and a second electrode layer formed on a surface of the solid electrolytic layer opposed to the air cell, electric energy being outputted from the first electrode layer and the second electrode layer. This makes it possible to drastically simplify and downsize the system structure and makes it possible to use the heat generated by the fuel cell reaction to be utilized as the heat source for the reaction of reforming organic hydride and hydrocarbon-content substances. Thus, a system structure of good energy efficiency can be constituted.

### BRIEF DESCRIPTION OF THE DRAWINGS

FIG. 1 is diagrammatic view of the reformer-mounted fuel cell car, which illustrates the structure thereof.
FIG. 2 is a diagrammatic view of the high-pressure hydrogen tank-mounted fuel cell car, which illustrates the structure thereof.
FIG. 3 is a diagrammatic view of the car with the fuel cell with a reformer having the reformer and the fuel cell integrated mounted, which illustrates the structure thereof.
FIG. 4 is a view illustrating the principle of the fuel cell with a reformer according to the present invention.
FIG. 5 is diagrammatic views of the unit structure of the cells, and the movements of substances and heat of the fuel cell with a reformer according to a first embodiment of the present invention.
FIG. 6 is a plan view of the arrangement of the cells, and the movements of the substances and the heat of the fuel cell with a reformer according to the first embodiment of the present invention.
FIG. 7 is diagrammatic views of the fuel cell with a reformer according to the first embodiment of the present invention, which illustrate a structure thereof.
FIG. 8 is diagrammatic views of the unit structure of the cells, and the movements of substances and heat of the fuel cell with a reformer according to a second embodiment of the present invention.
FIG. 9 is a plan view of the arrangement of the cells, and the movements of the substances and the heat of the fuel cell with a reformer according to the second embodiment of the present invention.
FIG. 10 is diagrammatic views of the fuel cell with a reformer according to the second embodiment of the present invention, which illustrate a structure thereof.
FIG. 11 is diagrammatic views of the unit structure of the cells, and the movements of substances and heat of the fuel cell with a reformer according to a third embodiment of the present invention.
FIG. 12 is a plan view of the arrangement of the cells, and the movements of the substances and the heat of the fuel cell with a reformer according to the third embodiment of the present invention.
FIG. 13 is diagrammatic views of the fuel cell with a reformer according to the third embodiment of the present invention, which illustrate a structure thereof.
FIG. 14 is diagrammatic views of the unit structure of the cells, and the movements of substances and heat of the fuel cell with a reformer according to a fourth embodiment of the present invention.
FIG. 15 is a plan view of the arrangement of the cells, and the movements of the substances and the heat of the fuel cell with a reformer according to the fourth embodiment of the present invention.
FIG. 16 is diagrammatic views of the fuel cell with a reformer according to the fourth embodiment of the present invention, which illustrate a structure thereof.
FIG. 17 is a plan view of the arrangement of the cells, and the movements of the substances and the heat of the fuel cell with a reformer according to a fifth embodiment of the present invention.

### REFERENCE NUMBERS

- 10: fuel system
- 12: reforming system
- 14: electric power/power generation system
- 16: drive system
- 18: fuel tank
- 20: recovery tank
- 22: fuel pump
- 24: reformer
- 26: separator
- 28: heat exchanger
- 30: fuel cell
- 32: controller
- 34: auxiliary electric power source
- 36: wheels
- 38: motor
- 40: fuel system
- 42: high-pressure hydrogen tank
- 44: fuel system
- 46: electric power/power generation system
- 48: fuel cell with a reformer
- 50: catalyst
- 52: reforming layer
- 54: first electrode layer
- 56: solid electrolytic layer
- 58: second electrode layer
- 60: hollow layer
- 62: solid electrolytic base material
- 64: reforming cell
- 66: air cell
- 68: first electrode layer
- 70: catalyst
- 72: second electrode layer
- 74: first header
- 74a: firs stack
- 74b: second stack
- 76: second header
- 76a: first stack
- 76b: second stack
- 78: inlet port
- 80: discharge port
- 82: gas passage
- 84: gas passage
- 86: gas passage
- 88: gas passage
- 90: discharge port
- 92: supply port
- 94: gas passage
- 96: gas passage
- 98: gas passage
- 100: gas passage
- 102: solid electrolytic base material
- 104: reforming cell
- 106: air cell
- 108: hydrogen cell
- 110: first header
- 112: second header
- 114: inlet port
- 116: supply port
- 118: discharge port
- 120: gas passage
- 122: gas passage
- 124: gas passage
- 126: gas passage
- 128: gas passage
- 130: gas passage
- 132: discharge port
- 134: discharge port
- 136: supply port
- 138: gas passage
- 140: gas passage
- 142: gas passage
- 144: gas passage
- 146: gas passage
- 148: gas passage
- 150: spare cell

### BEST MODE FOR CARRYING OUT THE INVENTION

### [Background Art and the Principle of the present Invention]

### (Background Art of the present Invention)

The fuel cell with a reformer according to the present invention was made based the background art which will be described below.

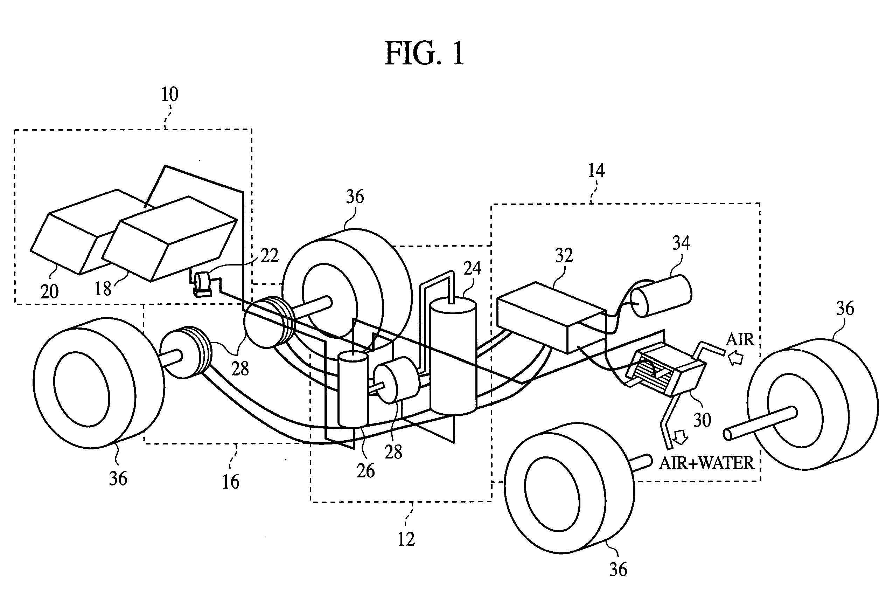

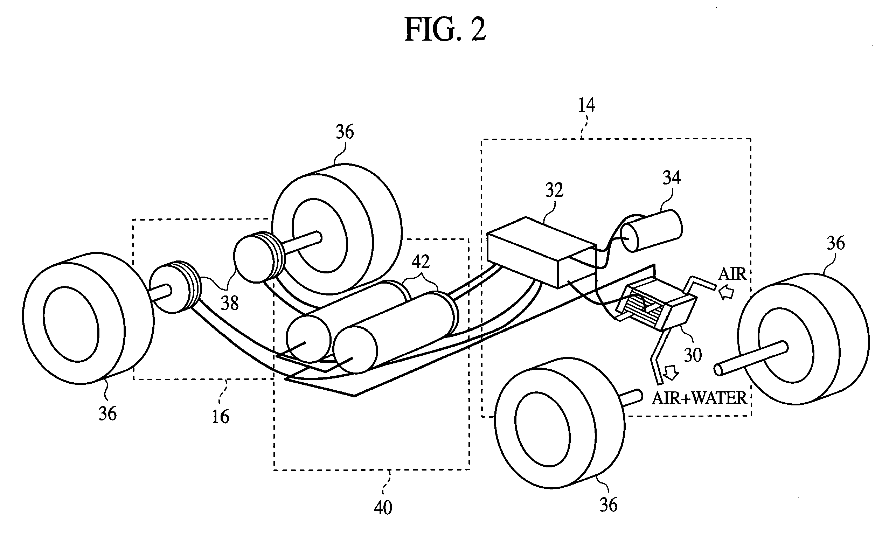

Conventionally, the structure of the cars with the fuel cell mounted varies depending on methods of supplying hydrogen to be consumed in the fuel cell, and the typical one will be as illustrated in FIGs. 1 and 2.

FIG. 1 is a diagrammatic view of the structure of a fuel cell car with a fuel cell and a reformer for reforming organic hydride to generate hydrogen to be supplied to the fuel cell mounted. In this case, the basic structure of the fuel cell car is divided in a fuel system 10, a reforming system 12, an electric power/power generation system 14 and a drive system 16.

The fuel system 10 includes a fuel tank 18 for storing organic hydride, and a recovery tank 20 for recovering dehydrogenated substances produced by the dehydrogenation of the organic hydride in the reforming system 12. The fuel system 10 further includes a fuel pump 22 for supplying the organic hydride stored in the fuel tank 18 to the reforming system 12.

The reforming system 12 includes a reformer 24 for dehydrogenating by the action of a catalyst and heat the organic hydride supplied by the fuel system 10, and a separator 26 for separating gas generated in the reformer 25 into hydrogen gas and liquid. The reformer system 12 further includes a heat exchanger 28 for heating the organic hydride supplied by the fuel system 10 by the heat of the dehydrogenated substances of the organic hydride produced by the reformer 24.

The electric power/power generation system 14 includes a fuel cell 30 for consuming the hydrogen supplied by the reforming system 12 to generate electric power, and a controller 32 for conducting the control, etc. of the drive system 16.

The drive system 16 includes a motor 38 for driving the drive wheels of the wheels 36 by the electric power generated by the fuel cell 30.

The fuel cell car of the onboard reforming type having the reformer 24 mounted as illustrated in FIG. 1 has disadvantages that the presence of the reforming system 12 complicates the system and the operation of the system and increases the fabrication cost.

FIG. 2 is a diagrammatic view of the structure of the fuel cell car with the fuel cell, and a high-pressure hydrogen tank for storing hydrogen to be supplied to the fuel cell mounted. In this case, the basic structure of the fuel cell car is divided in a fuel system 40, an electric power/power generation system 14 and a drive system 16.

The fuel system 40 includes a high-pressure hydrogen tank 42 for storing hydrogen to be consumed by the fuel cell 30.

The electric power/power generation system 14 and the drive system 16 have substantially the same constitutions as the fuel cell car with the reformer 12 mounted on illustrated in FIG. 1.

As illustrated in FIG. 2, in the fuel cell car with the high-pressure hydrogen tank 42 mounted on, hydrogen is supplied from the high-pressure hydrogen tank directly to the fuel cell 30. That is, the reforming system 12 required by the onboard reforming-type fuel cell car illustrated in FIG. 1 is not necessary. Thus, the fuel cell car with the high-pressure hydrogen tank 42 mounted on is a simpler system in comparison with the onboard reforming-type fuel cell car with the reformer 24 mounted, and is rapidly becoming prevalent.

However, as described above, it is a fear factor in terms of the safety to mount the high-pressure hydrogen tank, when collisions are considered. When hydrogen is supplied at service stations, the safety must be ensured with careful attentions.

Thus, if the onboard reforming-type fuel cell car has a system which is as simple as the fuel cell car of the high-pressure hydrogen tank mounted type, the onboard reforming-type can be a type which superior to the fuel cell car of the high-pressure tank mounted on-type in terms of the safety, the infrastructure which is the usable existing equipment, etc. and can be predominant.

For example, if the reformer and the fuel cell can be integrated in the onboard reforming-type fuel cell car, the constituent members of the fuel cell car can be drastically simplified.

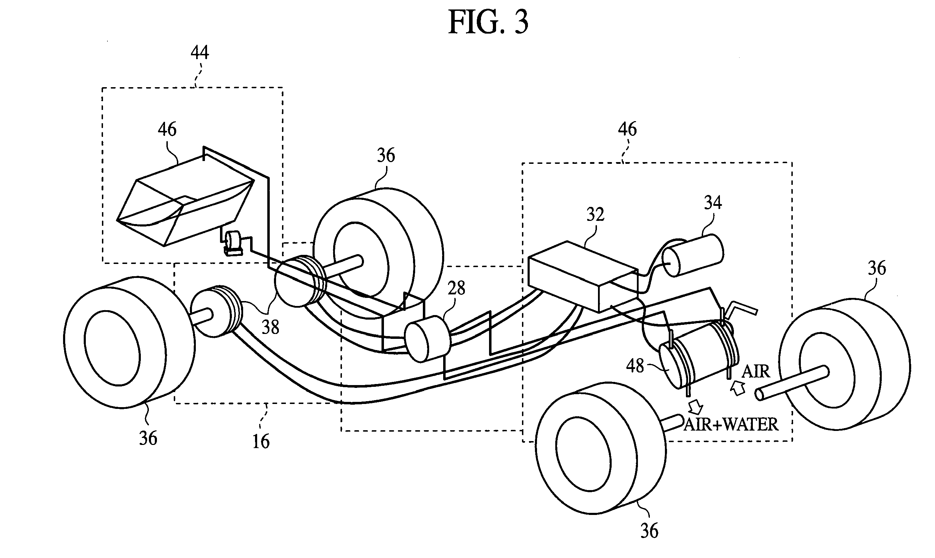

FIG. 3 is a diagrammatic view of a structure of the fuel cell car with the reformer having the reformer and the fuel cell integrated. In this case, the basic structure of the fuel cell car is divided in a fuel system 44, an electric power/power generation system 46 and a drive system 16.

The fuel system 44 includes a fuel tank 46 which has, e.g., a first chamber for containing organic hydride, a second chamber for containing dehydrogenated substances produced by the dehydrogenation of the organic hydride, and which has a partition wall dividing the first chamber and the second chamber, freely varying the volume ratio between the first chamber and the second chamber. The use of such fuel tank 46 allows the organic hydride and the dehydrogenated substances to be efficiently container and can downsize the fuel system and save space equally or more than the use of the high-pressure hydrogen tank in the fuel system. Higher safety can be ensured in comparison with the use of the high-pressure hydrogen tank I the fuel system. The fuel tank of such structure is detailed in the specification of Japanese Patent Application No. 2003-43154 filed by the inventors of the present application.

Furthermore, if the fuel cell with the reformer 48 having the reformer and the fuel cell integrated can be used in the electric power/power generation unit 46, the fuel cell car which can ensure high safety, has a simple structure and can be inexpensively fabricated can be provided.

The present invention has realized the fuel cell with the reformer having the reformer and the fuel cell integrated, and can contribute to the simplification of the constituent members of the fuel cell car, the improvement of the heat efficiency, etc.

### (Principle of the present Invention)

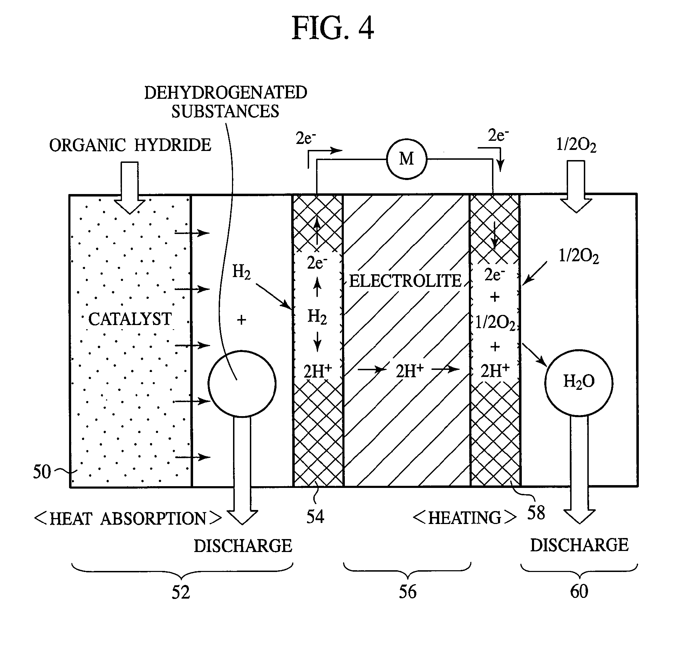

The principle of the fuel cell with a reformer according to the present invention will be explained below with reference to FIG. 4. FIG. 4 is a diagrammatic view of the fuel cell with a reformer according to the present invention, which illustrates a basic structure thereof.

As illustrated in FIG. 4, the fuel cell with a reformer according to the present invention has the basic structure comprising a reforming layer 52 which has a catalyst 50 for the dehydrogenation reaction and dehydrogenates by the catalyst the organic hydride introduced thereinto, a first electrode layer 54, a solid electrolytic layer 56, a second electrode layer 58 and a hollow layer 60 for air to be introduced into as the oxygen source for the fuel cell reaction, which are formed adjacent to each other in the stated order.

As the organic hydride to be introduced into the reforming layer 52 is used a substance given by hydrogenating an aromatic hydrocarbon compound, e.g., a substance given by hydrogenating singly or a mixture of an aromatic hydrocarbon, e.g., benzene, toluene, xylem, naphthalene or others, preferably, singly or a mixture of saturated alicyclic hydrocarbon of 6 - 18 carbons, e.g., cyclohexane compounds, such as cyclohexane, methylcyclohexane, dimethylcyclohexane, ethylmethylcyclohexane, trimethylcyclohexane, propylcyclohexane, butylcyclohexane, diethylcyclohexane, isobutylcyclohexane, tetrmethylcyclohexane, isopropylmethylcyclohexane, amylcyclohexane, 4-tert-butylcyclohexane, (2,2-dimethylpropyl)cylcohexane, pentamethylcyclohexane, tert-butyldimethlycyclohexane, diisoprolylcyclohexane, hexamethylcyclohexane, triethylcyclohexane, 1-cyclohexylhexane, 1-cyclohexylpenthane, etc.; tetralin compounds, such as tetralin, methyltetralin, ethyltetralin, propyltetralin, isopropyltetralin, dimethyltetralin, diethyltetralin, dipropyltetralin, diisopropyltetralin, methylethyltetralin, methylpropyltetralin, methylisopropyltetralin, ethylpropyltetralin, ethylisopropyltetralin, propylisopropyltetralin, etc.; decalin compounds, such as decalin, methyldecalin, ethyldecalin, propyldecalin, isopropyldecalin, dimethyldecalin, diethyldecalin, dipropyldecalin, diisopropyldecalin, methylethyldecalin, methylpropyldecalin, methylisopropyldecalin, ethylpropyldecalin, ethylisopropyldecalin, propylisopropyldecalin, etc.; or others.

When the organic hydride is introduced into the reforming layer 52, the organic hydride is decomposed into hydrogen and dehydrogenated substances by the dehydrogenation reaction with the catalyst 50 and heat. For example, when cyclohexane is used as the organic hydride, the organic hydride is composed into hydrogen and benzene. The dehydrogenation reaction of this organic hydride is an endothermic reaction.

When the solid electrolytic layer 56 is formed of a proton conductor, the hydrogen generated by the decomposition of the organic hydride loses electrons in the first electrode layer 54 to be diffused as protons in the solid electrolytic layer 56.

Here, the proton conductor forming the solid electrolytic layer 56 can be, e.g., β-alumina-based ceramics, perovskite proton conductor (SrTiO-based, SrCeO-based, BeCeYO-based, M/LaZrO-based, BaZrYO-based, SrZrYbO-based, etc.), alumina-based (Mg/α-Al₂O₃, Na/β-Al₂O₃, etc.), various layer oxides (tungsten oxides-based, glass/ceramics-based, etc.).

Also, the proton conductor forming the solid electrolytic layer 56 can be a solid superstrong acid carrying a superstrong acid, e.g., sulfuric acid-based solid superstrong acid, such as sulfuric acid carrying tin oxide (SO₄/SnO₂), sulfuric acid carrying zirconia (SO₄/ZrO₂), sulfuric acid carrying hafnium oxide (SO₄/HfO₂), sulfuric acid carrying titanium oxide (SO₄/TiO₂), sulfuric acid carrying aluminum oxide (SO/Al₂O₃), sulfuric acid carrying iron oxide (SO₄/Fe₂O₃), sulfuric acid carrying silicon oxide (SO₄/SiO₂), etc.; tungstic acid-based solid superstrong acid, such as tungstic acid carrying zirconium (WO₃/ZrO₂), tungstic acid carrying tin oxide (WO₃/SnO₂), tungstic acid carrying titanium oxide (WO₃/TiO₂), tungstic acid carrying iron oxide (WO/Fe₂O₃), etc.; solid superstrong acid, such as molybdenum oxide carrying zirconia (MoO₃/ZrO₂), boron oxide carrying zirconia (B₂O₃/ZrO₂), etc. Furthermore, these solid superstrong acids may carry a metal, such as Fe, Mn, Ir, Pt, Rh, Ru, Os, Pd or others, by 0 - 3 %.

The protons which have diffused in the solid electrolytic layer 56 and arrived at the second electrode layer 58 reacts in the second electrode 58 with the electrons flowing from the first electrode 54 to the second electrode 58 and with oxygen in the air introduced into the hollow layer 60, and water is generated. This fuel cell reaction is always accompanied by the exothermic reactions that the part which is not converted into electric energy heats, and the converted electric energy is heated by electric resistance.

Thus, the electrons flow between the first electrode layer 54 and the second electrode layer 58 to generate an electromotive force between the first electrode layer 54 and the second electrode layer 58, and electric energy is outputted from the first electrode layer 54 and the second electrode layer 58.

The solid electrolytic layer 56 can be formed of oxygen ion conductor in place of the proton conductor. As the oxygen ion conductor forming the solid electrolytic layer 56 can be used, e.g., Yttria Stabilized Zirconia (YSZ), ceria-based oxide, their compound material, M/LaGaO₃-based oxide, Sr(Ce,Yb)O₃-based oxide, BaCeO₃-based oxide, perovskite oxide, (Ba, La, Sr)₂In₂O₅-based oxide, LaCeMgO₃-based oxide, etc.

In the structure illustrated in FIG. 4, the concentration in the reforming layer 52 is higher than that of the hollow layer 60, and it is more advantageous to use the proton conductor in which the protons flows into the hollow layer 60 than to use the oxygen ion conductor in which oxygen ions flow into the reforming layer 52.

As described above, one major characteristic of the fuel cell with a reformer according to the present invention is that the reforming layer 52 where the dehydrogenation reaction of the organic hydride is conducted, and the layer where the fuel cell reaction is conducted are integrated with the solid electrolytic layer 56 disposed therebetween.

The function of the reformer is thus integrated with the fuel cell, whereby the system structure can be drastically simplified and downsized in comparison with the reformer and the fuel cell being provided separate from each other, and the fuel cell with a reformer according to the present invention is applied to fuel cell cars, whereby the system structure of the fuel cell cars can be simplified.

Another major characteristic of the fuel cell with a reformer according to the present invention is that the reforming layer 52 where the dehydrogenation reaction of the organic hydride, which is an endothermic reaction, and the layer where the fuel cell reaction accompanied by the exothermic reaction are disposed adjacent to each other.

The reforming layer 52 where the reforming reaction of the organic dehydride, which is an endothermic reaction, is conducted, and the layer where the fuel cell reaction, which is accompanied by an exothermic reaction, is conducted are disposed adjacent to each other, whereby the heating by the fuel cell reaction can be utilized as the heat source for the reforming reaction of the organic dehydride. The generated output required of the fuel cell and the calorie required for the reforming have the relationship that they agree in decreases and increases, whereby advantageously the heat balance can be made automatically in accordance with a required output of the fuel cell. Thus, the fuel cell with a reformer according to the present invention can construct a system which is superior in the energy efficiency.

In the present invention, more specifically, the cell forming the reforming layer 52 and the cell forming the hollow layer 60 are arranged in a matrix with the partition wall forming the solid electrolytic layer 56 disposed therebetween, forming as the basic structure the above-described layer structure illustrated in FIG. 4. This arrangement makes it possible to supply hydrogen, generate electric power and exchange heat and to form a compact system of good energy efficiency. The fuel cell with a reformer according to the present invention will be specifically detailed below in the first to fifth embodiments.

### [A First Embodiment]

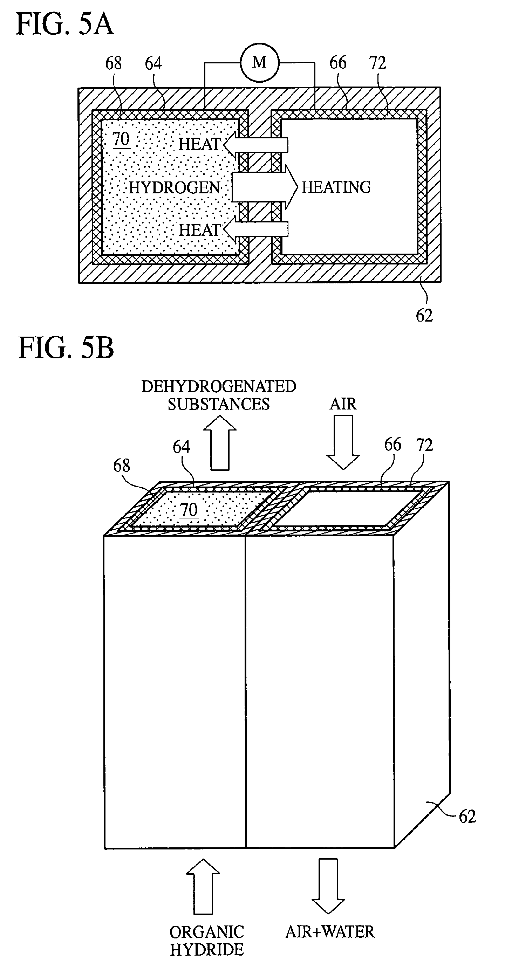

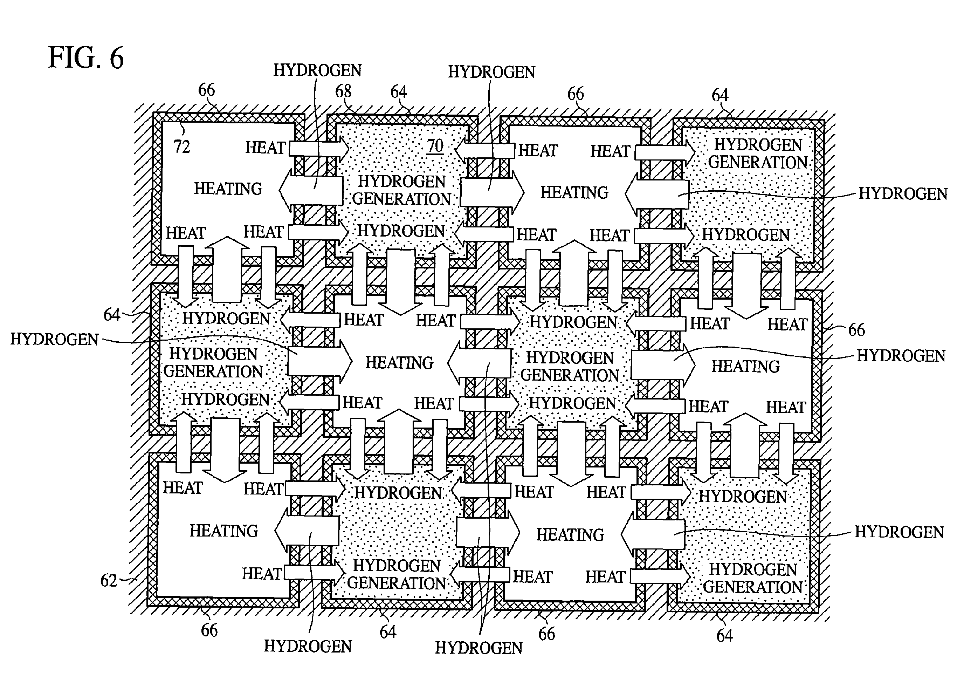

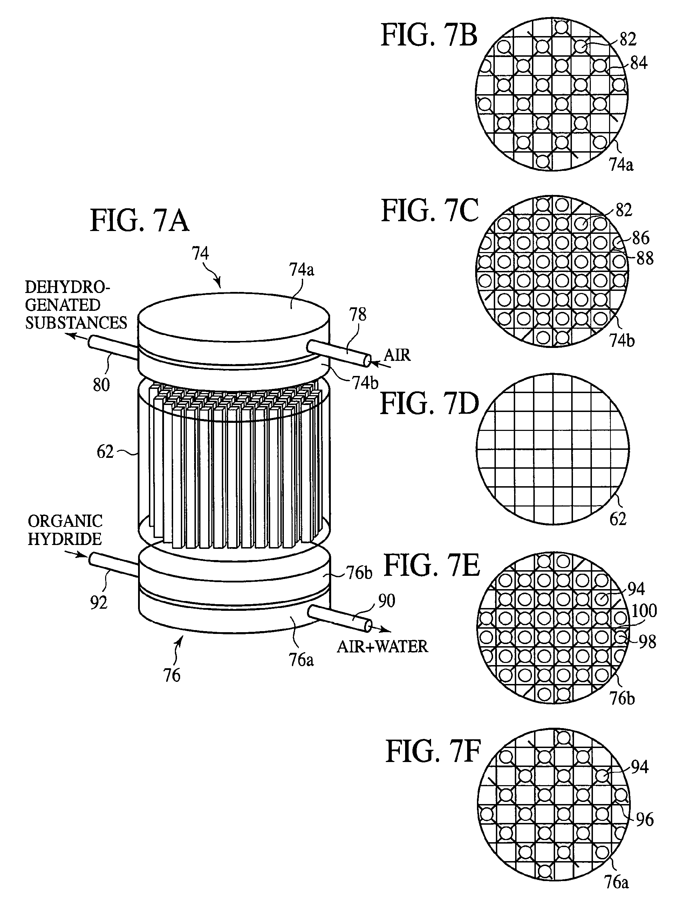

The fuel cell with a reformer according to a first embodiment of the present invention will be explained with reference to FIGS. 5 to 7. FIG. 5 is diagrammatic views illustrating a unit structure of the cells and the flows of substances and heat of the fuel cell with a reformer according to the present embodiment. FIG. 6 is a plan view of the arrangement of the cells and the flows of substances and heat of the fuel cell with a reformer according to the present embodiment. FIG. 7 is diagrammatic views of the fuel cell with a reformer according to the present embodiment, which illustrate the structure thereof.

First, the unit structure of the cell of the fuel cell with a reformer according to the present embodiment will be explained with reference to FIG. 5.

As illustrated in FIGs. 5A and 5B, a reforming cell 64 into which organic hydride is introduced and in which the dehydration reaction of the organic hydride is conducted, and an air cell 66 into which air as the oxygen source of the fuel cell reaction is introduced and in which the fuel cell reaction is conducted, are formed on the solid electrolytic base material 62 of proton conductor. As the material of the solid electrolytic base material 62, the above-described proton conductor can be used. The solid electrolytic base material 62 of the proton conductor becomes to exhibit the proton conductivity at a temperature of, e.g., 450 - 550°C. Hydrogen is generated at about 250 - 450°C by the reforming of the organic hydride in the reforming cell 64. Thus, in the operation of the fuel cell with a reformer according to the present embodiment, the heat balance is ensured.

The reforming cell 64 and the air cell 68 are both formed on the solid electrolytic base material 62 from the upper end surface to the lower end surface and are respectively defined in a hollow pillar-shaped section in a rectangular sectional shape, e.g., a square sectional shape.

A first electrode layer (hydrogen electrode) 68 is formed on the inside wall of the reforming cell 64. The first electrode layer 68 is formed of, e.g., a metal, conductive ceramics, a conductive organic substance, an oxide conductor or others. The first electrode layer 68 may be formed on the entire or a part of the inside wall of the reforming cell 64.

A catalyst 70 for the dehydration reaction is filled in the reforming cell 64 with the first electrode layer 68 formed on the inside wall. As the catalyst for the dehydration reaction can be used the catalyst described in the specification of Japanese Patent Application Unexamined Publication No. 2001-198469, i.e., a metal carrying catalyst of at least one or more metals selected from group consisting of platinum, palladium, ruthenium, rhodium, iridium, nickel, cobalt, iron, rhenium, vanadium, chromium, tungsten, molybdenum and copper carried on at least 1 or more carrier selected from group consisting of active carbon, zeolite, titania, carbon nanotube, molecular sieve, zirconia, mesopore silica porous material, alumina and silica. The catalyst 70 is filled in the reforming cell 64 with the particles, for example, of the catalyst defining gaps among one another so that the gas of the organic hydride, etc. can flow in the reforming cell 64.

The reforming cell 64, into which the gaseous organic hydride is introduced and in which the reforming reaction for decomposing the organic hydride into hydrogen and dehydrogenated substances is conducted, is thus constituted.

A second electrode layer (oxygen electrode) 72 is formed on the inside wall of the air cell 66 formed adjacent to the reforming cell 64. The second electrode layer 72 is formed of, e.g., metal conductive ceramics, conductive organic substance, an oxide conductor or others, as is the first electrode layer 68 formed on the inside wall of the reforming cell 64. The second electrode layer 72 may be formed on the entire or a part of the inside wall of the air cell 66, as is the first electrode layer 68.

The air cell with the second electrode layer 72 formed on is hollow, so that the air introduced into the air cell 66 and water generated by the fuel cell reaction can flow.

The air cell 66, into which air as the oxygen source for the fuel cell reaction is introduced, and in which the fuel cell reaction is conducted, is thus constituted.

In the fuel cell with a reformer according to the present embodiment, a plurality of the above-described unit structures each of the reforming cell 64 and the air cell 66 illustrated in FIG. 5 are formed. That is, as illustrated in FIG. 6, a plurality of hollow pillar-shaped sections in a rectangular sectional shape are formed in a matrix in the solid electrolytic base material 62 of proton conductor, and one of the adjacent hollow pillar-shaped sections is the reforming cell 64, and the other of the adjacent hollow pillar-shaped sections is the air cell 6.

Furthermore, on the cylindrical solid electrolytic base material 62 with the reforming cells 64 and the air cells 66 formed in, as illustrated in FIG. 7A, a first header 74 for discharging the gas which has passed through the respective plural reforming cells 64 upward from below and introducing air into the respective plural air cells 66 is provided. Below the solid electrolytic base material 62, a second header 76 for introducing the gaseous organic hydride into the respective plural reforming cells 64 and discharging air, etc. which have passed through the plural air cells 66 downward from above is provided. The first and the second headers 74, 76 as the structures for distributing the introduction and discharge of the fluids will be detailed below with reference to FIG. 7. FIG. 7B is a sectional view of the first stack of the first header along the disc surface thereof, FIG. 7C is a sectional view of the second stack of the first header along the disc surface thereof, FIG. 7D is a sectional view of the solid electrolytic base material along the disc surfaces of the first and the second headers, FIG. 7E is a sectional views of the second header along the disc surface of the second stack, and FIG. 7F is a sectional view of the second header along the disc surface of the first stack.

The first header 74 is formed of the disc-shaped first stack 74a having an inlet port 78 for introducing air into the air cells 66, and the disc-shaped second stack 74b having a discharge port 80 for discharging the gas which has passed through the reforming cells 64, which are stacked the former on the latter. The fist header 74 is disposed with the disc-shaped surface positioned substantially vertical to the pillar-shaped reforming cells 64 and the air cells 66 formed in the solid electrolytic base material 62 and with the second stack 74b opposed to the solid electrolytic base material 62.

In the first stack 74a and the second stack 74b of the first header 74, as illustrated in FIGs. 7B and 7C, a plurality of cylindrical gas passages 82 communicated respectively with the plural air cells 66 are formed. The respective gas passages 82 are formed substantially vertical to the disc-shaped surfaces of the first stack 74a and the second stack 74b from the underside of the second stack 74b, which is in contact with the air cells 66 and to the inside of the first stack 74a. A plurality of lattice-shaped gas passages 84 are formed in the first stack 74a, and communicate the respective gas passages 82 with each other and furthermore, communicate the respective gas passages 82 with the inlet port 78 of the first stack 74a. The lattice-shaped gas passages 84 are formed, e.g., by covering grooves formed in the disc-shaped surface of the first stack 74 with a sealing compound or others.

In the second stack 74b of the first header 74, a plurality of cylindrical gas passages 86 communicated respectively with the plural reforming cells 64 are formed. The respective gas passages 86 are formed substantially vertical to the disc-shaped surface of the second stack 74b from the underside of the second stack 74b connected to the reforming cells 64 to the inside of the second stack 74b. A plurality of lattice-shaped air passes 88 are formed in the second stack 74b, and the lattice-shaped gas passages 88 communicate the respective gas passages 86 with each other and furthermore with the discharge port 80 of the second stack 74b. As is the lattice-shaped gas passages 84, the lattice-shaped gas passages 88 are formed, e.g., by covering grooves formed in the disc-shaped surface of the second stack 74b with a sealing compound or others.

On the other hand, the second header 76 is formed of a disc-shaped first stack 76a having a discharge port 90 for discharging the gas, etc. which have passed through the air cells 66 and a second stack 76b having supply port 92 for introducing the gaseous organic hydride into the reforming cells 64, which are stacked the former on the latter. The second header 76 is disposed with the disc-shaped surface positioned substantially vertical to the pillar-shaped reforming cells 64 and the air cells 66 formed in the solid electrolytic base material 62, and the second stack 76b of the second stack 76 is opposed to the electrolytic base material 62.

In the first stack 76a and the second stack 76b of the second header 76, a plurality of cylindrical gas passages 94 respectively communicated with the plural air cells 66 are formed. The respective gas passages 94 are formed substantially vertically to the disc-shaped surfaces of the first stack 76a and the second stack 76b from the upper surface of the second stack 76b connected to the air cells 66 to the inside of the first stack 76a. A plurality of lattice-shaped gas passages 96 are formed in the first stack 76a, and the lattice-shaped gas passages 96 communicate the respective gas passages 94 with each other and furthermore, the respective gas passages 84 with the discharge port 90 of the first stack 76a. AS are the air lattice-shaped gas passages 84, 88, the lattice-shaped gas passages 96 are formed, e.g., by covering the grooves formed in the disc-shaped surface of the first stack 76a with a sealing compound or others.

In the second stack 76b of the second header 76, a plurality of cylindrical gas passages 98 respectively communicated with the plural reforming cells 64 are formed. The respective gas passages 98 are formed substantially vertically to the disc-shaped surface of the second stack 76b from the upper surface of the second stack 76b connected to the reforming cells 64 to the inside of the second stack 76. In the second stack 76b, a plurality of lattice-shaped gas passages 100 are formed, and the lattice-shaped gas passages 100 communicate the respective gas passages 98 with each other and furthermore, the respective gas passages 98 with the inlet port 92 of the second stack 87b. As are the lattice-shaped gas passages 84, 88, 96, the lattice-shaped gas passages 100 are also formed, e.g., by covering the grooves formed into the disc-shaped surface of the second stack 76b with a sealing compound or others.

Thus, the fuel cell with a reformer according to the present embodiment is constituted.

One major characteristic of the fuel cell with a reformer according to the present embodiment is that a plurality of reforming cells 64 where the dehydrogenation reaction of the organic hydride is conducted, and a plurality of air cells 66 where the fuel cell reaction is conducted are arranged in a matrix, adjacent to each other with a partition walls of the solid electrolytic base material 62 of proton conductor, whereby the system structure can be drastically simplified and downsized in comparison with the system having the reformer and the fuel cell provided separate from each other.

Another major characteristic of the fuel cell with a reformer according to the present embodiment is that the reforming cells 64 where the reforming reaction of the organic hydride, which is an endothermic reaction, is conducted, and the air cells 66 where the fuel cell reaction accompanied by the exothermic reaction are disposed adjacent to each other in a matrix with the partition walls of the solid electrolytic base material 62 of proton conductor. This structure makes it possible to efficiently supply the heat generated in the air cells 66 by the fuel cell reaction as the heat required for the reforming reaction of the organic hydride in the adjacent reforming cells 64.

Next, the operation of the fuel cell with a reformer according to the present embodiment will be explained with reference to FIGs. 5 to 7.

The solid electrolytic base material 62 is heated up to an operation temperature at which the solid electrolytic base material 62 exhibits the proton conductivity. The solid electrolytic base material 62 of proton conductivity is heated to, e.g., about 450 - 550°C.

Then, as illustrated in FIG. 7A, the gaseous organic hydride is supplied to the supply port 92 of the second header 76. The organic hydride supplied to the supply port 92 is introduced into the respective plural reforming cells 64 formed in a matrix in the solid electrolytic base material 62 through the lattice-shaped gas passages 100 formed in the second stack 76b, and the gas passages 98 formed in the second stack 76b.

Thus, the organic hydride introduced into the respective plural reforming cells 64 from the lower ends thereof goes on flowing upward in the reforming cells 64 as illustrated in FIG. 5B.

On the other hand, concurrently with the introduction of the organic hydride into the reforming cells 64, air is fed into the inlet port 78 of the first header 74. The air fed into the inlet port 78 is introduced into the respective plural air cells 66 through the lattice-shaped gas passages 84 formed in the first stack 74a, and the gas passages 82 formed in the first stack 74a and the second stack 74b.

Thus, the air introduced in the respective plural reforming cells 66 from the upper ends thereof goes on flowing downward as illustrated in FIG. 5B.

The organic hydride flowing upward in the reforming cells 66 is dehydrogenated by the catalyst 70 filled in the reforming cells 64 and decomposed into hydrogen and dehydrogenated substances. For example, when cyclohexane is used as the organic hydride, the cyclohexane is decomposed into hydrogen, and benzene which is a dehydrogenated substance.

Here, one major characteristic of the fuel cell with a reformer according to the present embodiment is that, as described above, the organic hydride is flowed in the reforming cells 64 upward from below, and air is flowed in the air cells 66 downward from above. That is, another major characteristic is that the direction of the flow of the organic hydride in the reforming cells 64 and the direction of the flow of the air in the air cells 66 are opposite to each other. The flows of the organic hydride and the flow of the air are thus arranged, whereby the fuel cell reaction can be efficiently conducted as will be described below.

The organic hydride is progressively dehydrogenated as the organic hydride goes on in the reforming cells 64. Accordingly, a gradient of the hydrogen concentration is generated in the reforming cells 64, and the hydrogen concentration is higher farther from the ends of the reforming cells 64 where the organic hydride is introduced.

On the other hand, the oxygen in the air goes on being consumed by the fuel cell reaction as the air flows in the air cells 66 downward from above.

Accordingly, the direction of the flow of the organic hydride in the reforming cells 64 and the direction of the air in the air cells 66 are made opposite to each other, whereby the regions of the reforming cells 64, where the hydrogen concentration is higher and the regions in the air cells 66, where the oxygen concentration is higher are adjacent to each other. Thus, the fuel cell reaction can be made more efficient.

The hydrogen generated in the reforming cells 64 loses the electrons and becomes protons as expressed by the following reaction formula in the first electrode layer 68 formed on the inside walls of the reforming cells 64.

H₂ → 2H⁺ + 2e⁻

The thus-generated hydrogen ions move in the partition wall of the solid electrolytic base material 62 of hydrogen conductor and arrive at the air cell 66 adjacent to the reforming cell 64, as illustrated in FIGs. 5A and 6.

In the air cells 66, the protons which have arrived at the second electrode layer 72 formed on the inside wall of the air cells 66, through the partition wall, reacts, as expressed by the following reaction formula, with oxygen in the air, and the electrons flowing form the first electrode 68 to the second electrode 72 through the outside circuit, and water is generated.

(1/2)O₂ + 2H⁺ + 2e⁻ → H₂O

Accordingly, the hydrogen generated at the reforming cells 64, and the oxygen in the air introduced into the air cells 66 make the reactions of exchanging the electrons with the first electrode 68 and the second electrode 72, and electric power is generated.

Here, the above-described fuel cell reaction in the air cells 66 is accompanied by the exothermic reaction, and heat is generated in the air cells 66.

The heat generated in the air cells 66 is supplied to the reforming cells 64 adjacent to the air cells 66 through the solid electrolytic base material 62 as illustrated in FIGs. 5A and 6. In the fuel cell with a reformer according to the present embodiment, the reforming cells 64 where the reforming reaction of the organic hydride, which is an endothermic reaction, and the air cells 66 where the fuel cell reaction involving the exothermic reaction is conducted are disposed adjacent to each other, whereby the heat by the fuel cell reaction can be utilized as the heat source of the reforming reaction of the organic hydride.
The generated output required of the fuel cell and the calorie required for the reforming have the relationship that they agree in decreases and increases, whereby advantageously, the heat balance can be made automatically in accordance with a required output of the fuel cell. Thus, the fuel cell with a reformer according to the present invention can construct a system which is superior in the energy efficiency.

In the reforming cells, the dehydrogenated substances generated by the reforming of the organic hydride goes on flowing upward in the reforming cells 64 and are discharged through the discharge port 80 through the gas passages 86 and the lattice-shaped gas passages 88 formed in the second stack 74b of the first header 74.

The dehydrogenated substances discharged through the discharge port 80 are recovered in a recovery tank (not illustrated) or others. The recovered dehydrogenated substances can be reused as the organic hydride as the fuel by adding hydrogen. A heat exchanger for heating the organic hydride to be introduced into the reforming cells 64 by the heat of the dehydrogenated substances generated by the reforming of the organic hydride as described above may be provided, whereby the system can be further superior in the energy efficiency.

In the air cells 66, the water generated by the fuel cell reaction is discharged together with the air flowing in the air cells 66 downward from above from the discharge port 90 through the gas passages 94 formed in the second stack 76b and the first stack 76a of the second header 76 and the lattice-shaped gas passages 96 formed in the first stack 76a.

As described above, power generation is conducted in the fuel cell with a reformer according to the present embodiment.

As described above, according to the present embodiment, the reforming cells 64 of rectangular section, where the dehydrogenation reaction of the organic hydride, which is an endothermic reaction, is conducted, and the air cells 66 of rectangular section, where the fuel cell reaction accompanied by the exothermic reaction are arranged in a matrix, adjacent to each other with the partition walls of the solid electrolytic base material 62 of proton conductor therebetween, whereby the system structure can be drastically simplified and downsized, and the heat generated by the fuel cell reaction in the air cells 66 can be utilized as the heat source of the reforming reaction of the organic hydride. Thus, the system of good energy efficiency can be constituted.

In the present embodiment, the section of the reforming cells 64 and the air cells 66 is rectangular but is not essentially rectangular. The section may be polygonal, such as triangular, pentagonal, hexagonal, or circular.

### [A Second Embodiment]

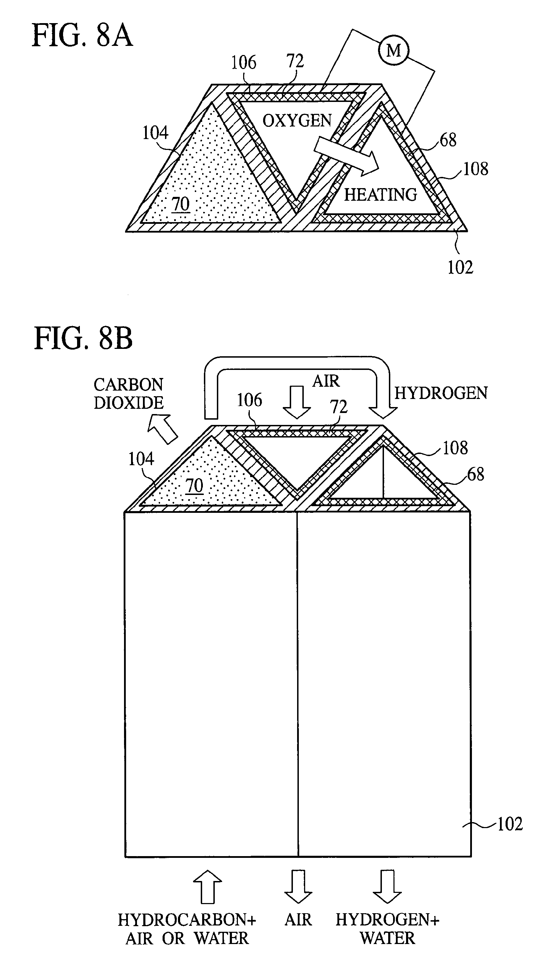

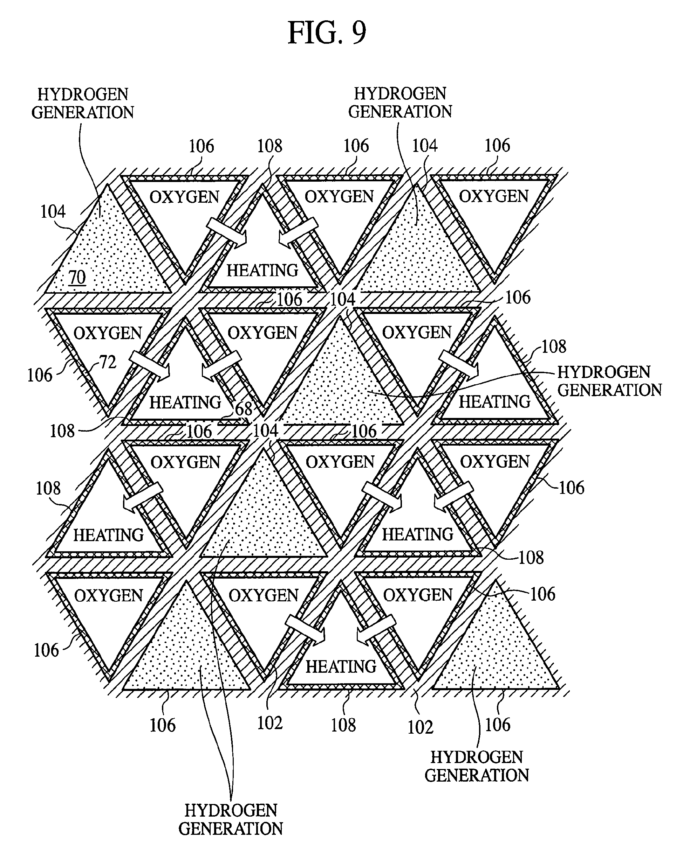

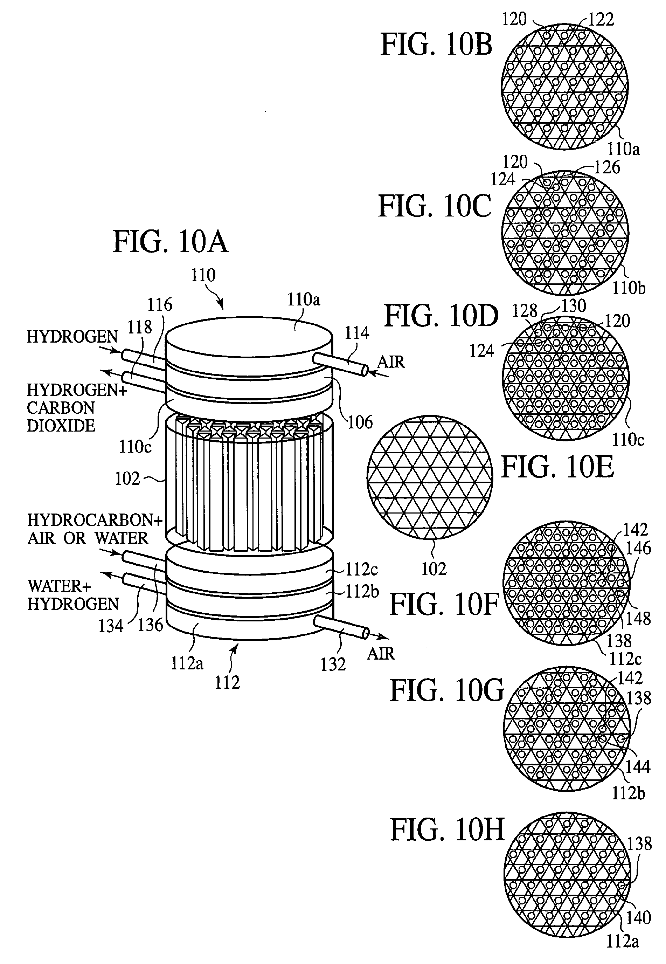

The fuel cell with a reformer according to a second embodiment of the present invention will be explained with reference to FIGs. 8 to 10. FIG. 8 is diagrammatic views of the unit structure of the cells, and the movement of the substances and the heat of the fuel cell with a reformer according to a second embodiment of the present invention. FIG. 9 is a plan view of the arrangement of the cells, the movement of substances and heat of the fuel cell with a reformer. FIG. 10 is diagrammatic views of the fuel cell with a reformer according to the present embodiment, which illustrate the structure thereof. The description of the same members of the present embodiment as those of the fuel cell with a reformer according to the first embodiment will not be repeated or simplified.

First, the unit structure of the cells of the fuel cell with a reformer according to the present embodiment will be explained with reference to FIG. 8. This reformer is the type of generating hydrogen from hydrocarbon, such as LPG, LNG, naphtha, gasoline, kerosene, etc. (the so-called steam reforming).

As illustrated in FIGs. 8A and 8B, hydrocarbon, and air or water are introduced into a solid electrolytic base material 102 of oxygen ion conductor, to form a reforming cell 104 in which hydrogen is generated, an air cell 106 into which air as the oxygen source for the fuel cell reaction is introduced, and a hydrogen cell 108 into which the hydrogen generated in the reforming cell 106 is introduced. As the material of the solid electrolytic base material 102, the above-described oxygen ion conductor can be used. The oxygen ion conductor can be of the so-called molten salt type. However, in this case, where the electrolyte is not solid, the oxygen ion conductor is used as the solid electrolytic base material by combining with a separator of a solid porous substance.

The reforming cell 104, the air cell 106 and the hydrogen cell 108 are all formed on the solid electrolytic base material 102 from the upper end surface to the underside in hollow pillar-shaped sections of triangular, e.g., equilateral triangular section. The reforming cell 104, the air cell 106 and the hydrogen cell 108 are arranged in the stated order with the sides of the respective triangular sections opposed to each other with the partition walls of the solid electrolytic base material 102 therebetween.

As in the fuel cell with a reformer according to the first embodiment, a catalyst for the reforming 70 is filled in the reforming cell 104. No electrode layer is formed on the inside wall of the reforming cell 104, as is distinct from the fuel cell with a reformer according to the first embodiment.

On the inside wall of the hydrogen cell 108, a first electrode layer 68 is formed. The hydrogen cell with the first electrode layer 68 formed on is hollow to permit the hydrogen introduced into the hydrogen cell and the water generated by the fuel cell reaction to flow.

On the inside wall of the air cell 106, a second electrode layer 72 is formed. The air cell 106 with the second electrode layer 72 formed on is hollow to permit the air introduced into the air cell 106 to flow.

In the fuel cell with a reformer according to the present embodiment, a plurality of the unit cell structures each the reforming cell 104, the air cell 106 and the hydrogen cell 108 illustrated above in FIG. 8 are formed in the solid electrolytic base material 102 of oxygen ion conductor. That is, as illustrated in FIG. 9, in the solid electrolytic base material 10 of oxygen ion conductor, a plurality of the hollow pillar-shaped sections in a triangular sectional shape are formed in a matrix, and 3 continuous hollow pillar-shaped sections are the reforming cell 104, the air cell 106 and the hydrogen cell 108 respectively.

On the cylindrical solid electrolytic base material with the reforming cells 104, the air cells 106 and the hydrogen cells 108 formed in, as illustrated in FIG. 10A, there is provided a first header 110 which discharge gases which have passed through the plural reforming cells 104 upward from below, introduces air into the respective plural air cells 106 and introduces the hydrogen generated in the reforming cells 104 into the respective hydrogen cells 108. Below the solid electrolytic base material 102, there is provided a second header 112 which introduces gaseous hydrocarbon, and air or water into the respective plural reforming cells 104, discharges the air which has passed through the respective plural air cells 106 downward from above, and discharges the hydrogen, etc. which have passed through the plural hydrogen cells 108 downward from above. The first and the second headers 110, 112 as the structures for distributing the introduction and discharge of the fluids will be detailed below reference to FIG. 10. FIG. 10B is a sectional view of the first stack of the first header along the disc surface thereof. FIG. 10C is a sectional view of the second stack of the first header along the disc surface thereof. FIG. 10D is a sectional view of the third stack of the first header along the disc surface thereof. FIG. 10E is a sectional view of the third stack of the first header along the disc surface thereof. FIG. 10F is a sectional view of the third stack of the second header along the disc surface thereof. FIG. 10G is a sectional view of the second stack of the second header along the disc surface thereof. FIG. 10H is a sectional view of the first stack of the second header along the disc surface thereof.

The first header 110 is formed of a disc-shaped first stack 110a having an inlet port 114 for introducing air into the air cell 106, a second stack 110b having a supply port 116 for introducing into the hydrogen cell 108 the hydrogen generated in the reforming cell 104, and a disc-shaped third stack 110c having a discharge port 118 for discharging the gas which has passed through the reforming cell 104, which are stacked in the stated order the former on the latter. The first header 110 is disposed with the disc surface positioned substantially vertically to the reforming cell 104, the air cell 106 and the hydrogen cell 108 formed in the solid electrolytic base material 102, and the third stack 110c of the first header 110 is opposed to the solid electrolytic base material 102.

As illustrated in FIGs. 10B to 10D, in the first to the third stacks 110a - 110c of the first header 110, a plurality of cylindrical gas passages 120 are formed in communication with the respective plural air cells 106. The respective gas passages 120 are formed from the underside of the third stack 110c connected to the air cells 106 to the inside of the first stack 110a. In the first stack 110a, a plurality of lattice-shaped gas passages 112 are formed, and the lattice-shaped gas passages 122 communicate the respective gas passages 120 with each other and furthermore the respective gas passages 120 with the inlet port 114 of the first stack 110a. The lattice-shaped gas passages 122 are formed, e.g., by covering grooves formed in the disc surface of the first stack 110a with a sealing compound.

In the second and the third stack 110b, 110c of the first header 110, cylindrical gas passages 124 are formed in communication with the respective plural hydrogen cells 108. The respective gas passages 124 are formed from the underside of the third stack 110c connected to the hydrogen cells 108 to the inside of the second stack 110b substantially vertical to the disc surfaces of the second and the third stacks 110c. In the second stack 110b, a plurality of lattice-shaped gas passages 126 are formed, and the lattice-shaped gas passages 126 communicate the respective gas passages 124 with each other and furthermore, the respective gas passages 124 are connected to the inlet port 116 of the second stack. As are the lattice-shaped gas passages 122, the lattice-shaped gas passages 126 are also formed, e.g., by covering the grooves formed in the disc surface of the second tack 110b with a sealing compound or others.

In the third stack 110c of the first header 110, cylindrical gas passages 128 connected to the respective plural reforming cells 104 are formed. The respective gas passages are formed substantially vertically to the disc surface of the third stack 1110c from the underside of the third stack 110c connected to the reforming cells 104 to the inside of the third stack 110c. A plurality of lattice-shaped gas passages 130 are formed in the third stack 110c, and the lattice-shaped gas passages 13 communicate the respective gas passages 130 with each other and furthermore, the respective gas passages 130 are connected to the discharge port 118 of the third stack 110c. As are the lattice-shaped gas passages 122, 126, the lattice-shaped gas passages 130 are also formed, e.g., by covering grooves formed in the disc surface of the third stack 110c with a sealing compound or others.

The second header 112 is formed of a first disc-shaped stack 112a having a discharge port 132 for discharging gases which have passed through the air cells 106, a second disc-shaped stack 112b having a discharge port 134 for discharging hydrogen, etc. which have passed through the hydrogen cells 108, and a third disc-shaped stack 112c having a supply port 136 for introducing gaseous hydrocarbon, and air or water into the reforming cells 106, which are stacked in the stated order the latter of the former. The second header 112 is disposed with the disc surface position substantially vertically to the pillar-shaped reforming cells 104, the air cells 106 and the hydrogen cells 108, and the third stack 112c of the second header 112 is opposed to the solid electrolytic base material 102.

In the first to the third stacks 112a - 122c of the second stack 112, a plurality of cylindrical gas passages 138 are formed in communication with the respective plural air cells. The respective gas passages 128 are disposed substantially vertically to the disc surfaces of the first to the third stacks 112a - 112c from the upper surface of the third stack 112c connected to the air cells 106 to the inside of the first stack 112a. In the first stack 112a, a plurality of lattice-shaped gas passages 140 are formed, and the lattice-shaped gas passages 140 communicate the respective gas passages 140 and furthermore, the respective gas passages 140 are connected to the discharge parrot 132 of the first stack 112a. As are the lattice-shaped gas passages 122, 126, 130, the lattice-shaped gas passages 140 are also formed by, e.g., by covering grooves formed in the disc surfaces of the first stack 112a with a sealing compound or others.

In the second and the third stacks 112b, 112c of the second header 112, a plurality of cylindrical gas passages 142 are formed in communication with the respective plural hydrogen cells 108. The respective gas passages 142 are formed substantially vertical to the disc surfaces of the second and the third stacks 112b, 112c from the upper surface of the third stack 112c connected to the hydrogen cells 108 to the inside of the second stack 112b. A plurality of lattice-shaped gas passages 133 are formed in the second stack 112b, and the lattice-shaped gas passages 144 communicate the respective gas passages 142 with each other and furthermore, the respective gas passages 142 are connected to the discharge port 134 of the second stack 112b. As are the lattice-shaped gas passages 122, 126, 130, 140, the lattice-shaped gas passages 142 are formed by covering groves formed in the disc surface of the second stack 112b with a sealing compound or others.

In the third stack 112c of the second header 112, cylindrical gas passages 146 are formed in communication with the respective plural reforming cells 104. The respective gas passages 146 are formed substantially vertically to the disc surface of the third stack 112c from the upper surface of the third stack 112c connected to the reforming cell 104 to the inside of the third stack 112c. In the third stack 112c, a plurality of lattice-shaped gas passages 148 are formed, and the lattice-shaped gas passages 148 communicate the respective gas passages 146 with each other and furthermore, the respective gas passages 146 are connected to the supply port 136 of the third stack 112c. As are the lattice-shaped gas passages 122, 130, 140, 144, the lattice-shaped gas passages 148 are formed, e.g., by covering grooves formed in the disc surface of the third stack 112c with a sealing compound or others.

Thus, the fuel cell with a reformer according to the present embodiment is constituted.

In the fuel cell with a reformer according to the present embodiment as well, the reforming cells 104 where the reforming reaction of hydrocarbon, which is an endothermic reaction, and the hydrogen cells where the fuel cell reaction involving the exothermic reaction are disposed in a matrix adjacent to each other with the partition walls of the solid electrolytic base material 102 of oxygen ion conductor, whereby as in the fuel cell with a reformer according to the first embodiment, the system structure can be drastically simplified and downsized, and the heat generated by the fuel cell reaction in the hydrogen cells 018 can be utilized as the heat source of the reforming reaction of the hydrocarbon. Thus, the system of good energy efficiency can be constituted.

Next, the operation of the fuel cell with a reformer according to the present embodiment will be explained with reference to FIGs. 8 to 10.

First, the solid electrolytic base material 102 is heated to the operation temperature at which the solid electrolytic base material 102 exhibits the ion conductivity. The solid electrolytic base material 102 of oxygen ion conductor is heated to, e.g., about 800 - 1000°C.

Then, as illustrated in FIG. 10A, hydrocarbon, and air or water are supplied into the supply port 136 of the third stack 112c of the second header 112. The hydrocarbon, etc. supplied into the supply port 136 of the third stack 112c are introduced into the respective plural reforming cells 104 formed in the solid electrolytic base material 102 in a matrix through the lattice-shaped gas passages 148 formed in the third stack 112c and the gas passages 146 formed in the third stack 112c.

The hydrocarbon, etc. introduced into the plural reforming cells 104 from the lower ends go on flowing upward in the reforming cells 104, as illustrated in FIG. 8B.

On the other hand, concurrently with introducing the hydrocarbon etc. into the reforming cells 104, air is supplied into the inlet port 114 of the first stack 110a of the first header 110. The air supplied into the inlet port 114 of the first stack 110a is introduced the respective plural air cells 106 formed in the solid electrolytic base material 102 in a matrix through the lattice-shaped gas passages 122 formed in the first stack 110a and the gas passages 120 formed in the first to the third stacks 110a - 110c.

The hydrocarbon following upward in the reforming cells 104 is reformed by the catalyst 70 filled in the reforming cells 104 and goes on being decomposed into hydrogen and carbon dioxide.

The hydrogen generated in the reforming cells 104 goes on flowing into the reforming cells 104 together with the carbon dioxide generated by the reforming of the hydrocarbon to be discharged from the discharge port 118 through the gas passages 120 and the lattice-shaped gas passages 130 formed in the third stack 110c of the first header 110.

The hydrogen and the carbon dioxide discharged from the discharge port 118 are supplied to a separator (not illustrated) for dividing the hydrogen and the carbon dioxide. The carbon dioxide separated from the hydrogen by the separator is discharged into the atmospheric air or recovered in a recovery tank (not illustrated). On the other hand, the separated hydrogen is supplied to the supply port 116 of the second stack 110b of the first header 110. The hydrogen supplied to the supply port 116 is introduced into the respective plural hydrogen cells 108 formed in the solid electrolytic base material 102 in a matrix through the lattice-shaped gas passages 126 formed in the second stack 110b and the gas passages 124 formed in the second and the third stacks 110b, 110c.

Thus, as illustrated in FIG. 8B, the air flows downward from above in the plural air cells 106, and the hydrogen flows downward from above in the plural hydrogen cells 108.

The oxygen in the air flowing in the air cells 106 receives in the second electrode layer 72 formed on the inside walls of the air cells 106 electrons moving from the first electrode layer 68 to the second electrode layer 72 through the outside circuit and becomes oxygen ions as expressed by the following reaction formula

(1/2)O₂ + 2e⁻ → O²⁻

The thus-generated oxygen ions move in the partition walls of the solid electrolytic base material 102 of oxygen ion conductor and arrive at the hydrogen cells 108 adjacent to the air cells 106, as illustrated in FIGs. 8A and 9.

In the hydrogen cells 108, the oxygen ions arriving at the hydrogen cells 108 through the partition walls, and the hydrogen flowing in the hydrogen cells 108 react with each other in the following reaction formula in the first electrode layer 68 formed on the inside walls of the hydrogen cells 108, and water is generated.

O²⁻ + H₂ → H₂O + 2e⁻

As described above, the oxygen in the air introduced into the air cells 106, and the hydrogen generated in the reforming cells 104 and introduced into the hydrogen cells 108 make the reactions of exchanging the electrons with the second electrode layer 72 on the inside walls of the air cells 106 and with the first electrode layer 68 on the inside walls of the hydrogen cells 108, and electric power is generated.

The hydrogen generated in the reforming cells 104 is separated from the carbon dioxide to be introduced into the hydrogen cells 108 for the fuel cell reaction, in other words, the oxygen ions are not moved directly to the reforming cells 104 for the above-described fuel cell reaction in the reforming cells 104. This is for the following reason. That is, when the above-described fuel cell reaction is made in the reforming cells 104, the reaction of the hydrocarbon, etc. present in the reforming cells 104 and the oxygen ions react with each other, i.e., the combustion reaction of the hydrocarbon takes place, in addition to the above-described reaction. This should not take place, which is the reason. This combustion reaction not only lowers the reaction efficiency but also causes defective operations. However, the fuel cell with a reformer according to the present embodiment includes the hydrogen cells 104 into which the hydrogen generated in the reforming cells 104 and separated from the carbon dioxide is introduced, whereby these disadvantages are hindered.

Here, the heat generated by the above-described fuel cell reaction in the hydrogen cells 108 is utilized as the heat for the reforming cells 104, and is balanced.

The heat generated in the hydrogen cells 108 is supplied to the reforming cells 104 through the partition walls of the solid electrolytic base material 102. As described above, in the fuel cell with a reformer according to the present embodiment as well, the reforming cells 106 where the reforming reaction with the hydrocarbon, which is an endothermic reaction, is conducted, and the hydrogen cells 108 where the fuel cell reaction, which is the exothermic reaction, is conducted are disposed in one and the same solid electrolytic base material 102, whereby, as in the fuel cell with a reformer according to the first embodiment, the heat generated by the fuel cell reaction can be utilized as the heat source of the reforming reaction of the hydrocarbon. Thus, the fuel cell with a reformer according to the embodiment, can be a system of good energy efficiency.

In the hydrogen cells 108, the water generated in the hydrogen cells 108 by the fuel cell reaction is following download from above to below, and is discharged from the discharge port 134 through the gas passages 142 formed in the second and the third stacks 112b, 112c of the second header 112 and the lattice-shaped gas passages 144 formed in the second stack 112b.

As described above, the fuel cell with a reformer according to the present embodiment generates electric power.

As described above, according to the present embodiment, the triangular sectional reforming cells 104, where the reforming reaction of the hydrocarbon, which is an exothermic reaction, is conducted, and the triangular sectional hydrogen cells 108, where the heat is generated by the fuel cell reaction are formed in a matrix adjacent to each other with the partition walls of the solid electrolytic base material 102 of oxygen ion conductor, whereby the system structure can be drastically simplified and downsized, and the heat generated by the fuel cell reaction in the hydrogen cells 108 can be utilized as the heat source for the reforming reaction of the hydrocarbon. Thus, the system of good energy efficiency can be constituted.

In the present embodiment, the reforming cells 104, the air cells 106 and the hydrogen cells 108 are formed in the solid electrolytic base material 102 of oxygen ion conductor, whereby the fuel cell reaction is made by the oxygen ions moving in the solid electrolytic base material 102. However, it is possible to form the reforming cells 104, the air cells 106 and the hydrogen cells 108 in the solid electrolytic base material 62 of proton conductor, whereby the fuel cell reaction is made by the protons moving in the solid electrolytic base material 62.

### [A Third Embodiment]

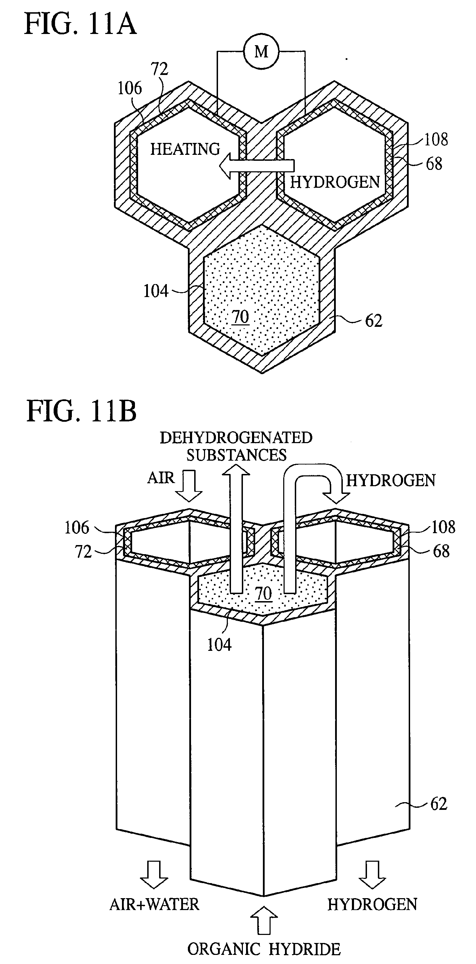

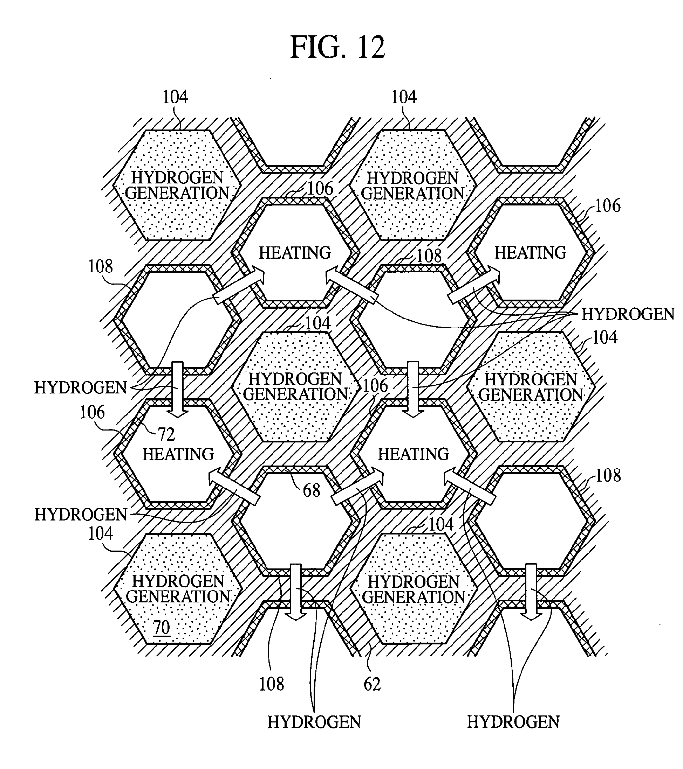

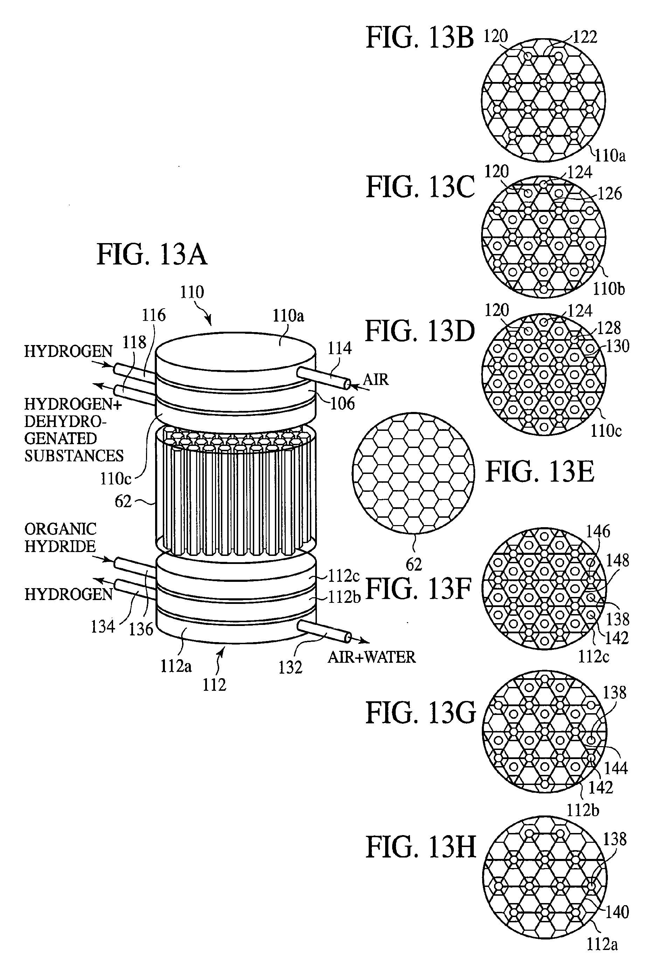

The fuel cell with a reformer according to a third embodiment of the present invention will be explained with reference to FIGs. 11 to 13. FIG. 11 is diagrammatic views of the unit structure of the cells, and the movement of substances and heat of the fuel cell with a reformer according to the present embodiment. FIG. 12 is a plan view of the arrangement of the cells, and the movement of the substances and the heat of the fuel cell with a reformer according to the present embodiment. FIG. 13 is diagrammatic views of the fuel cell with a reformer according to the present embodiment, which illustrate the structure thereof. The same members of the present embodiment as those of the fuel cell with a reformer according to the first and the second embodiments are represented by the same reference numbers not to repeat or to simplify their explanation.

The fuel cell with a reformer according to the present embodiment is the fuel cell with a reformer according to the second embodiment in which the reforming cells 104, the air cells 106 and the hydrogen cells 108 have hexagonal section in place of the triangular section, and the solid electrolytic base material forming these cells is formed of proton conductor.

First, the unit structure of the cells of the fuel cell with a reformer according to the present embodiment will be explained with reference to FIG. 11.

As illustrated in FIGs. 11A and 11B, in a solid electrolytic base material 62 of proton conductor there are formed a reforming cell into which organic hydride is introduced to conduct the dehydrogenation reaction of the organic hydride, an air cell 106 into which air as the oxygen source of the fuel cell reaction is introduced, and a hydrogen cell 108 into which the hydrogen generated in the reforming cell 106 is introduced into.

The reforming cell 104, the air cell 106 and the hydrogen cell 108 are all formed on the surface of the solid electrolytic base material 62 from the upper end surface to the lower end surface and are hollow pillar-shaped sections of a hexagonal sectional shape, e.g., a regular hexagonal sectional shape. These cells are arranged with 2 adjacent sides of the hexagonal sectional shape of one of these cells respectively opposed to 1 side of the hexagonal sectional shape of each of the other cells.

As in the fuel cell with a reformer according to the second embodiment, a catalyst 70 for the dehydrogenation reaction is filled in the reforming cell 104.

A first electrode layer 68 is formed on the inside wall of the hydrogen cell 108. The hydrogen cell with the first electrode layer 68 formed on is hollow to permit the hydrogen introduced into the hydrogen cell and the water generated by the fuel cell reaction to flow.

A second electrode layer 72 is formed on the inside wall of the air cell 106. The air cell 106 with the second electrode layer 72 formed on the inside wall is hollow to permit the air introduced into the air cell 106 to flow.

In the fuel cell with a reformer according to the present embodiment, a plurality of the above-described unit cells each of the reforming cell 104, the air cell 106 and the hydrogen cell 108 illustrated in FIG. 11 are formed in the solid electrolytic base material 62 of proton conductor. That is, as illustrated in FIG. 12, in the solid electrolytic base material 102 of proton conductor, a plurality of hollow pillar-shaped sections in the hexagonal sectional shape are formed in a honeycomb, and 3 adjacent hollow pillar-shaped sections are respectively the reforming cell 104, the air cell 106 and the hydrogen cell 108.

Furthermore, as illustrated in FIG. 13, on the cylindrical solid electrolytic base material 102 with the reforming cells 104, the air cells 106 and the hydrogen cells 108 formed in, there is provided a first header 110 which, in substantially the same way as in the fuel cell with a reformer according to the second embodiment, introduces air into the respective plural air cells 106 and furthermore, introduces the hydrogen generated in the reforming cells 104 into the hydrogen cells 108. Below the solid electrolytic base material 102 there is provided a second header 112 which introduces gaseous organic hydride into the respective reforming cells 104, discharges the air, etc. which have passed through the air cells 106 downward from above, and discharges the hydrogen which has passed through the hydrogen cells 108 downward from above.

In the fuel cell with a reformer according to the present embodiment as well, the reforming cells 104 where the dehydrogenation reaction of the organic hydride, which is an endothermic reaction, is conducted, and the air cells 106 where the fuel cell reaction involving the exothermic reaction is conducted are arranged in a matrix adjacent to each other with the partition walls of the solid electrolytic base material 62 of proton conductor, whereby as in the fuel cell with a reformer according to the first embodiment, the system structure can be drastically simplified and downsized, and the heat generated by the fuel cell reaction in the air cells 106 can be utilized as he heat source for the reforming reaction of the organic hydride. This makes it possible to constitute a system of good energy efficiency.

Then, the operation of the fuel cell with a reformer according to the present embodiment will be explained with reference to FIGs. 11 to 13.

First, the solid electrolytic base material 62 is heated to the operation temperature at which the solid electrolytic base material 62 exhibit the proton conductivity.

Then, as illustrated in FIG. 13A, organic hydride is supplied into the supply port 136 of the third stack 112c of the second header 112. The organic hydride supplied into the supply port 136 of the third stack 112c is introduced into the respective plural reforming cells 104 formed in the solid electrolytic base material 102 formed in a honeycomb through the lattice-shaped gas passages 148 formed in the third stack 112c and the gas passages 146 formed in the third stack 112c.

Thus, the organic hydride introduced from the plural reforming cells 104 from the lower ends thereof goes on flowing upward in the reforming cells 104 as illustrated in FGI. 11B.

On the other hand, concurrently with introducing the organic hydride into the reforming cells 104, air is fed into the inlet port 114 of the first stack 110a of the first header 110. The air fed into the inlet port 114 of the first stack 110a is introduced into the respective plural air cells 106 formed in the solid electrolytic base material 102 in a matrix through the lattice-shaped gas passages 122 formed in the first stack 110a and the gas passages 120 formed in the first to the third stacks 110a - 110c.

Thus, the air introduced into the respective plural reforming cells from the upper end thereof goes on flowing downward in the air cells 106 as illustrated in FIG. 11C.

The organic hydride flowing upward in the reforming cells 104 is dehydrogenated by the catalyst 70 filled in the reforming cells 104 and goes on being decomposed into hydrogen and dehydrogenated substances.

The hydrogen generated in the reforming cells 104 flows upward together with the dehydrogenated substances generated by the reforming of the organic hydride and discharged from the discharge port 118 via the gas passages 128 and the lattice-shaped gas passages 130 formed in the third stack 110c of the first header 110.

The hydrogen discharged together with the dehydrogenated substances from the discharge port 118 is separated, as in the fuel cell with a reformer according to the second embodiment, from the dehydrogenated substances and supplied into the supply port 116 of the second stack 110b of the first header 110. The hydrogen supplied into the supply port 116 is introduced into the respective plural hydrogen cells 108 formed in the solid electrolytic base material 102 in a honeycomb through the lattice-shaped gas passages 126 formed in the second stack 110b and the gas passages 124 formed in the second and the third stacks 110b, 110c.

Thus, as illustrated in FIG. 11B, the air flows in the respective plural air cells 106 downward from above, and the hydrogen flows in the respective plural hydrogen cells 108 downward from above.

The hydrogen flowing in the hydrogen cells 108 loses the electrons to become protons as expressed by the following reaction formula in the first electrode layer 68 formed on the inside walls of the hydrogen cells 108.

H₂ → 2H⁺ + 2e⁻

The thus-generated protons moves in the partition walls of the solid electrolytic base material 62 of proton conductor as illustrated in FIG. 11A and FIG. 12 and arrive at the air cells 106 adjacent to the hydrogen cells 108.

In the air cells 106, in the second electrode layer 72 formed on the inside walls, the protons which have arrived at the air cells 106 through the partition walls react with the oxygen in the air and the electrons moving from the first electrode layer 68 to the second electrode layer 72 via the outside circuit as expressed by the following reaction formula, and water is generated.

(1/2) O₂ + 2H⁺ + 2e⁻ → H₂O

As described above, the hydrogen generated in the reforming cells 104 and the oxygen in the air introduced into the air cells 106 make the reactions of exchanging the electrons with the first electrode layer 68 and with the second electrode layer 72, and electric power is generated.

Here, the above-described fuel cell reaction in the air cells 106 involves an exothermic reaction, and heat is generated in the air cells 106.

The heat generated in the air cells 106 is fed to the reforming cells 104 through the partition walls of the solid electrolytic base material 62. As described above, in the fuel cell with a reformer according to the present embodiment as well, the reforming cells 106 where the reaction of reforming the organic hydride, which is an endothermic reaction, is conducted, and the hydrogen cells 108 where the fuel cell reaction involving the exothermic reaction is conducted are disposed in one and the same solid electrolytic base material 102, whereby, as in the fuel cell with a reformer according to he first and the second embodiments, the heat generated by the fuel cell reaction can be utilized as the heat source for the reaction of forming the organic hydride. Thus, the fuel cell with a reformer according to the present embodiment can have a system structure of good energy efficiency.

In the air cells 106, the water generated by the fuel cell reaction is discharged together with the air flowing in the air cells 106 downward from above from the discharge port 134 through the gas passages 142 formed in the second and the third stacks 112b, 112c of the second header 112 and the lattice-shaped gas passages 144 formed in the second stack 112b.

As described above, electric power is generated in the fuel cell with a reformer according to the present embodiment.

As described above, according to the present embodiment, the reforming cells 104 of hexagonal section, where the dehydrogenation reaction of the organic hydride, which is an endothermic reaction, is conducted, and the air cells 106 of hexagonal section, where the fuel cell reaction involving the exothermic reaction is conducted are disposed in a honeycomb adjacent to each other with the partition walls of the solid electrolytic base material 62 of proton conductor therebetween, whereby the system structure can be drastically simplified and downsized, and the heat generated by the fuel cell reaction in the air cells 106 can be utilized as the heat source of the reaction of reforming the organic hydride. Thus, the system can have good energy efficiency.

### [A Fourth Embodiment]

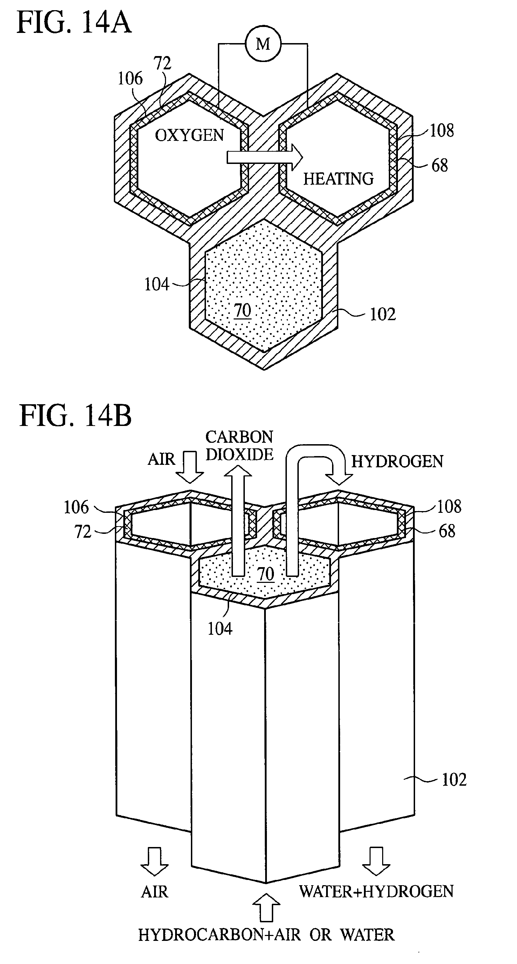

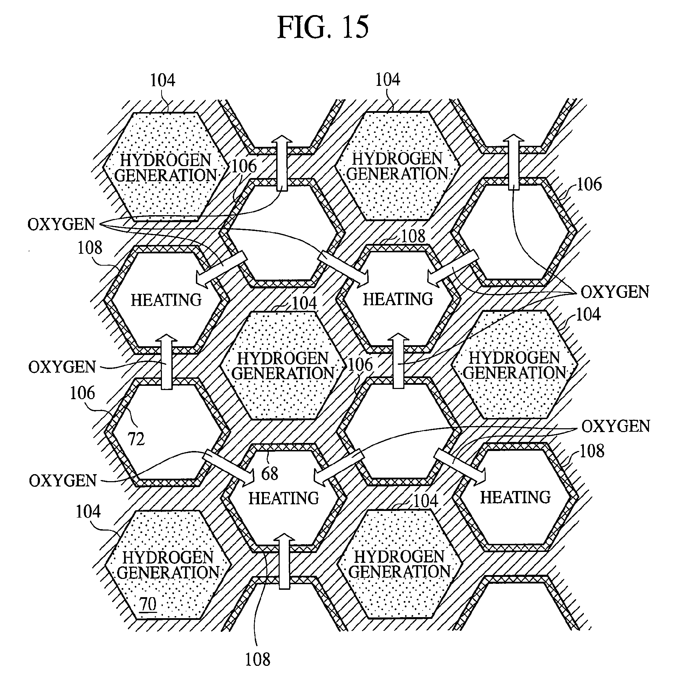

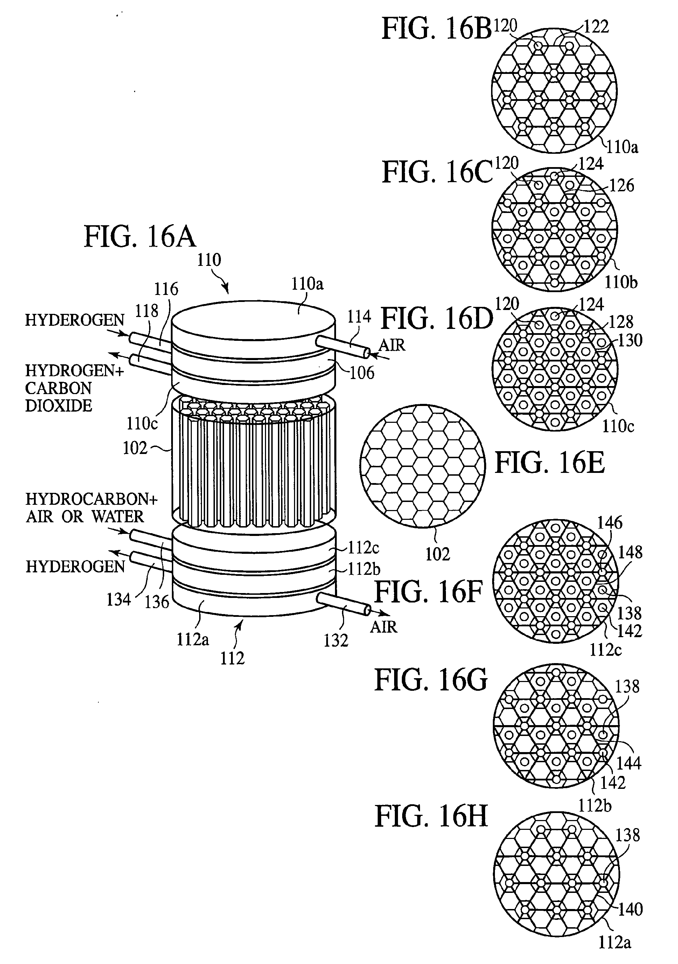

The fuel cell with a reformer according to a fourth embodiment of the present invention will be explained with reference to FIGs. 14 to 16. FIG. 14 is diagrammatic views of the unit structure, and the movements of substances and heat of the fuel cell with a reformer according to the fourth embodiment. FIG. 15 is a plan view o the fuel cell with a reformer according to the present embodiment, which illustrates the arrangement of the cells, and the movements of the substances and the heat. FIG. 16 is diagrammatic views of the fuel cell with a reformer according to the present embodiment, which illustrate the structure thereof. The same members of the present embodiment as those of the fuel cell with a reformer according to the first to the third embodiments are represented by the same reference numbers not to repeat or to simplify their explanation.

As illustrated in FIGs. 14 to 16, the basic structure of the fuel cell with a reformer according to the present embodiment is substantially the same as that of the fuel cell with a reformer according to the third embodiment. The fuel cell with a reformer according to the present embodiment is different from the fuel cell with a reformer according to the third embodiment in that in the former the reforming cells 104, the air cells 106 and the hydrogen cells 198 are formed in a solid electrolytic base material 102 of oxygen ion conductor in place of the slid electrolytic base material 62 of proton conductor.

The operation of the fuel cell with a reformer according to the present embodiment will be explained with reference to FIGs. 14 to 16.

In the same way as in the fuel cell with a reformer according to the third embodiment except reforming hydrocarbon and air or water in place of the organic hydride, the solid electrolytic base material 102 is heated to the operation temperature at which the solid electrolytic base material 102 exhibits the ion conductivity, and then as illustrated in FIG. 14A, hydrocarbon, etc. are flowed in the reforming cells 104 to thereby generate hydrogen, and the hydrogen is flowed in the hydrogen cells 108 while air is flowed in the air cells 106.

The oxygen in the air flowing the air cells 106 receives electrons moving from the first electrode layer 68 to the second electrode layer 72 via the outside circuit in the second electrode layer 72 and become oxygen ions as expressed by the following reaction formula.

(1/2)O₂ + 2e⁻ → O²⁻

As illustrated in FIGs. 14A and 15, the thus-generated oxygen ions move in the partition walls of the solid electrolytic base material 102 of oxygen ion conductor and arrive at the hydrogen cells 108 adjacent to the air cells 106.

In the hydrogen cells 108, the oxygen ions which have arrived at the hydrogen cells 108 through the partition walls and the hydrogen flowing the hydrogen cells 108 react with each other in the first electrode layer 68 formed on the inside walls of the hydrogen cells 108, and water is generated as expressed by the following reaction formula.

O²+ H₂ → H₂O + 2e⁻

As described above, the oxygen in the air introduced in the air cells 106, and the hydrogen generated in the reforming cells 104 and introduced in the hydrogen cells 108 make the reactions of exchanging the electrons with the second electrode layer 72 formed on the inside walls of the air cells 106 and with the first electrode layer 68 formed on the inside walls of the hydrogen cells 108, and electric power is generated.

Here, heat is generated in the hydrogen cells 108 by the above-described fuel cell reaction in the hydrogen cells 108.

The heat generated in the hydrogen cells 108 is fed to the reforming cells 104 through the partition walls of the solid electrolytic base material 102. As described above, in the fuel cell with a reformer according to the present embodiment as well, the reforming cells 106 where the reaction of reforming the hydrocarbon, which is an endothermic reaction, is conducted, and the hydrogen cells 108 where the fuel cell reaction involving the exothermic reaction is conducted are disposed in one and the same solid electrolytic base material 102, whereby in the same way as in the fuel cell with a reformer according to the first to the third embodiments, the heat generated by the fuel cell reaction can be utilized as the heat source for the reaction of reforming the hydrocarbon. Thus, the fuel cell with a reformer according to the present embodiment can have a system structure of good energy efficiency.

In the hydrogen cells 108, the water generated by the fuel cell reaction is discharged together with the hydrogen following in the hydrogen cells 108 downward from above through the discharge port 134 through the gas passages 142 formed in the second and the third stacks 112b, 112c of the second header 112 and the lattice-shaped gas passages 144 formed in the second stack 112b.

As described above, the electric power is generated by the fuel cell with a reformer according to the present embodiment.

As described above, according to the present embodiment, the reforming cells 104 of hexagonal section where the reaction of reforming the hydrocarbon, which is an endothermic reaction, is conducted, and the hydrogen cells 108 of hexagonal section where heat is generated by the fuel cell reaction are disposed adjacent to each other in a honeycomb with the partition walls of the solid electrolytic base material 102 of oxygen ion conductor therebetween, whereby the system structure can be drastically simplified and downsized, and the heat generated in the hydrogen cells 108 by the fuel cell reaction can be utilized a the heat source for the reaction of reforming the hydrocarbon. Thus, the system structure can have good energy efficiency.

### [A Fifth Embodiment]

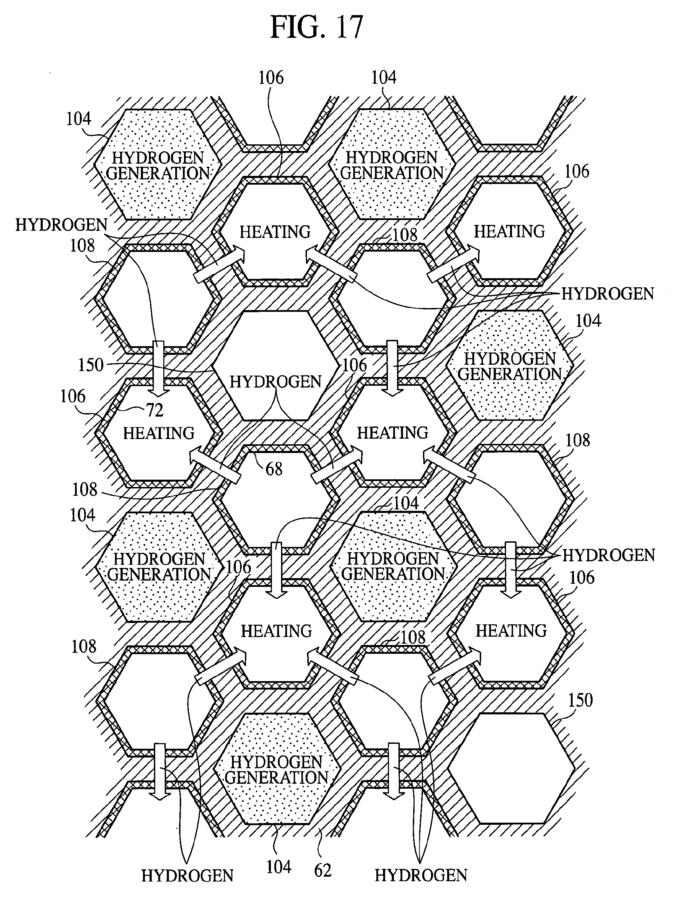

The fuel cell with a reformer according to a fifth embodiment of the present invention will be explained with reference to FIG. 17. FIG. 17 is a plan view of the arrangement of the cells, movements of substances and heat of the fuel cell with a reformer according to the present embodiment. The same members of the present embodiment as those of the fuel cell with a reformer according to the third embodiment are represented by the same reference numbers not to repeat or to simplify their explanation.

The basic structure of the fuel cell with a reformer according to the present embodiment is substantially the same as the fuel cell with a reformer according to the third embodiment. The fuel cell with a reformer according to the present embodiment is characterized mainly in that the fuel cell with a reformer according to the third embodiment has some of the reforming cells 104, the air cell 106 and/or the hydrogen cells 108 replaced by spare cells into which none of the organic hydride, the hydrogen and air is introduced and which distribute to neither of the reforming reaction and the fuel cell reaction. In FIG. 17, the spare cells 150 are formed in place of the reforming cells 104.

Some of the reforming cells 104, the air cells 106 and/or the hydrogen cells 108 are replaced by the spare cells 150, whereby the numbers of the reforming cells 104, the air cells 106 and the hydrogen cells 108 are suitably adjusted to thereby adjust the heat balance, etc. of the fuel cell.

In the present embodiment, the spare cells 150 are provided in the fuel cell with a reformer according to the third embodiment. However, spare cells may be provided in the fuel cell with a reformer according to other embodiments.

### [Modified Embodiments]

The present invention is not limited to the above-described embodiments and can cover other various modifications.

For example, in the above-described embodiments, the reforming cells 64, 104, the air cells 66, 106 and the hydrogen cells 108 have rectangular section, triangular section and hexagonal section. The sectional shape of these cells is not limited to rectangular shapes, triangular shapes and hexagonal shapes. Their sectional shapes may be, e.g., pentagonal, octagonal or circular. The sectional area of the reforming cells 64, 104, the air cells 66, 106 and the hydrogen cells 108 may vary. The sectional shape and the sectional area of the cells are suitably set, whereby the efficiency of the fuel cell, such as power generation efficiency, etc., can be set depending on conditions, such as the efficiency of reforming the organic hydride, etc.

In the above-described embodiments, the reforming cells 64, 104, the air cells 66, 106 and the hydrogen cells 108 formed in one and the same solid electrolytic base materials 62, 102 have the same sectional shape, but the sectional shapes of the cells formed in one and the same solid electrolytic base materials 62, 102 may vary.

In the above-described embodiments, the hollow pillar-shaped section formed in the solid electrolytic base materials 62, 102 are used as the reforming cells 64, 104, the air cells 66, 1106 and the hydrogen cells 108. However, these cells are not essentially pillar-shaped as long as the cells are hollow to allow the gases, etc. to be introduced into and discharged.

In the above-described embodiments, the organic hydride is introduced into the reforming cells 64, 104 to thereby make the reforming reaction to generate hydrogen. However, other gaseous hydrogen-content materials are introduced into the reforming cells 64, 106 to thereby make the reforming reaction to generate hydrogen.

In the above-described embodiments, the gaseous organic hydride is introduced into the reforming cells 64, 104. Hydrogen-content materials, such as organic hydride, etc., which are not essentially gaseous but liquid may be introduced into the reforming cells 64, 104.

In the above-described embodiments, the respective cells are formed in the cylindrical solid electrolytic base materials 62, 102. However, the solid electrolytic base materials 62, 102 are not essentially cylindrical. The first headers 74, 110 and the second headers 76, 112 are not essentially disc-shaped as described in the above embodiments and can be suitably designed changed in accordance with shapes of the solid electrolytic base materials 62, 102.

In the above-described embodiments, the organic hydride, air and the hydrogen are introduced into the respective lees formed in the solid electrolytic base materials 62, 102 by means of the first headers 74, 110 and the second headers 76, 112, but the direction of flowing the organic hydride, etc. in the respective cells are not essentially to those described in the above-embodiments. For example, in the first embodiment, the organic hydride and the air are flowed oppositely but may be flowed in the same direction. In the second to the third embodiments, air and the hydrogen are flowed in the same direction buy may be flowed oppositely.

### INDUSTRIAL APPLICABILITY

The fuel cell with a reformer according to the present invention is useful to realize a simple fuel cell system which has few problems in safety and can solve the problem of heating.

## Claims

1. A fuel cell with a reformer comprising:
a reforming cell containing a catalyst for reforming a hydrogen-content substance;
an air cell in which air containing oxygen flows;
a solid electrolytic layer of proton conductor or oxygen ion conductor disposed between the reforming cell and the air cell;
a first electrode layer formed on a surface of the solid electrolytic layer opposed to the reforming cell; and
a second electrode layer formed on a surface of the solid electrolytic layer opposed to the air cell,
electric energy being outputted from the first electrode layer and the second electrode layer.

2. A fuel cell with a reformer comprising:
a solid electrolytic base material of proton conductor with a plurality of first hollow sections and a plurality of second hollow section which are formed adjacent to each other;
reforming cells formed in the first hollow sections filled with a catalyst for reforming a hydrogen-content substance, into which the hydrogen-content substance is introduced;
air cells formed in the second hollow sections, into which air is introduced;
a first electrode layer formed on the inside walls of the reforming cells; and
a second electrode formed on the inside walls of the air cells,
electric energy being outputted from the first electrode layer and the second electrode layer.

3. A fuel cell with a reformer according to claim 2, wherein
a flow direction of the hydrogen-content substance in the reforming cells and a flow direction of the air in the air cells are opposite to each other.

4. A fuel cell with a reformer according to claim 2 or 3, in which
the solid electrolytic base material has a first end surface where one ends of the first and the second hollow sections are positioned, and a second end surface where the other ends of the first and the second hollow sections, and
which further comprises:
a first distribution structure disposed on the side of the first end surface of the solid electrolytic base material, for the introduction or the discharge of fluids from the side of the first end surface into or from the first hollow sections and/or the introduction or the discharge of fluids from the side of the first end surface into or from the second hollow sections; and
a second distribution structure disposed on the side of the second end surface of the solid electrolytic base material, for the discharge or the introduction of fluids from the side of the second end surface from or into the first hollow sections and/or the discharge or the introduction of fluid from the side of the second end surface from or into the second hollow sections.

5. A fuel cell with a reformer comprising:
a solid electrolytic base material formed of proton conductor or oxygen ion conductor and including a plurality of first hollow sections, a plurality of second hollow sections and a plurality of third hollow sections which are formed adjacent to each other;
reforming cells formed in the first hollow sections filled with a catalyst for reforming a hydrogen-content substance, into which the hydrogen-content substance is introduced;
air cells formed in the second hollow sections, into which air is introduced;
hydrogen cells formed in the third hollow sections, into which the hydrogen generated by reforming the hydrogen-content substance in the reforming cells is introduced;
a first electrode layer formed on the inside walls of the hydrogen cells; and
a second electrode layer formed on the inside wall of the air cells,
electric energy being outputted from the first electrode layer and the second electrode layer.

6. A fuel cell with a reformer according to claim 5, in which
the solid electrolytic base material including a first end surface where one ends of the first to the third hollow sections are positioned, and a second end surface where the other ends of the first to the third hollow sections are positioned, and which comprises:
a first distribution structure disposed on the side of the first end surface of the solid electrolytic base material, for the introduction or the discharge of fluids from the side of the first end surface into or from the first hollow sections, the introduction or the discharge from the side of the first end surface into or from the second hollow sections, and/or the introduction or the discharge from the side of the first end surface into or from the third hollow sections; and
a second distributor disposed on the side of the second end surface of the solid electrolytic base material, for the discharge or the introduction of fluids from the side of the second end surface from or into the first hollow sections, the discharge or the introduction of fluids from the side of the second end surface from or into the second hollow sections, and/or the discharge or the introduction of fluids from or into the third hollow sections.

7. A fuel cell with a reformer according to anyone of claims 2 to 6, wherein
the hollow sections are hollow pillar-shaped sections having a triangular sectional shape, a rectangular sectional shape, a pentagonal sectional shape, a hexagonal sectional shape, a octagonal sectional shape, or a circular sectional shape.

8. A fuel cell with a reformer according to any one of claims 2 to 7, wherein
some of the reforming cells, the air cells or the hydrogen cells are spare cells which do not contribute the reaction.
